# EUROPEAN PATENT APPLICATION

(11) **EP 4 119 343 A1**
(43) Date of publication of application: **18.01.2023**
(21) Application number: 21768728.4
(22) Date of filing: 10.03.2021
(51) Int. Cl.: B32B 27/00, B41C 1/05, B41N 1/12

(54) **LAMINATE AND METHOD FOR MANUFACTURING PRINT PLATE**

(30) Priority: 11.03.2020 JP 2020042098
(71) Applicant: Asahi Kasei Kabushiki Kaisha, Tokyo 1000006 (JP)
(72) Inventor: SATO, Yoshihiko, Tokyo 100-0006 (JP)
(74) Representative: Strehl Schübel-Hopf & Partner
(86) International application number: PCT/JP2021/009492
(87) International publication number: WO 2021/182504

(57) **Abstract**

Provided is a laminate comprising: a support; a printing original plate; and a protection film, wherein the printing original plate comprises a cured resin obtained by curing a photosensitive resin through an entire surface exposure on a side facing the protection film.

## Description

### Technical Field

The present invention relates to a laminate and a method for producing a printing plate.

### Background Art

Flexographic printing has heretofore been widely known which is used in printing on packaging materials such as cardboards, paper containers, paper bags, and films for soft packaging, building materials such as wall papers and decorative laminates, and various materials such as labels.

For the preparation of printing plates for use in the flexographic printing, a technique, so-called flexo CTP (computer to plate), has been developed in recent years which involves establishing a thin light absorbing layer called black layer on the surface of a photosensitive resin plate, irradiating the resultant with near-infrared laser beam to directly form a mask image on the photosensitive resin plate, then irradiating the resultant with light through the mask to cause crosslinking reaction, and then washing off a non-crosslinked portion of a non-irradiated portion with a developing solution.

However, the flexo CTP limits the dimension of patterns that can be formed to 20 µm, though the beam diameter of near-infrared laser is narrowed down to approximately 10 µm.

A laser engraving method which involves directly irradiating resin plate surface with a laser beam, and removing the resin in the portion irradiated with a beam so that a depressed pattern is formed has been proposed as another method for preparing such a printing plate (see, for example, Patent Literature 1).

Patent Literature 1 discloses, as the laser engraving method, a method of irradiating a cured photosensitive resin obtained by mixing with carbon black and photocuring with a fundamental wave of YAG laser (wavelength: 1.06 µm) which is near-infrared laser to form a pattern, in order to form a more highly fine pattern. Thus, a smaller laser beam diameter is attained by setting the oscillation wavelength of laser for use in engraving to a shorter wavelength. However, this engraving using near-infrared laser needs ingenuity to be designed as mentioned later.

Specifically, since general organic compounds have no strong light absorption in a near-infrared wavelength region, photosensitive resin need to be mixed with dyes or pigments having strong optical absorption characteristics in the wavelength region so as to absorb the light of near-infrared laser. Patent Literature 1 described above also states that a photosensitive resin is mixed with a black pigment called carbon black for near-infrared absorption.

However, the black pigment, etc. also exhibits strong optical absorption characteristics in an ultraviolet region and has a low ultraviolet transmittance. Therefore, in the case of using a cured photosensitive resin obtained by ultraviolet photocuring in laser engraving, a serious problem of the cured photosensitive resin is a lack of sufficient mechanical physical properties because ultraviolet ray does not permeate the inside of the resin.

Thus, a very difficult challenge to the photosensitive resin system supplemented with a near-infrared laser beam absorbing material is to achieve both the securing of laser engravability and the securing of mechanical physical properties.

Continuous wave near-infrared laser or pulsed near-infrared laser having a small highest peak output has heretofore been used in the engraving of cured photosensitive resin s. However, a problem of such laser is an insufficient energy for engraving materials having low optical absorption characteristics at an oscillation wavelength of the laser.

For example, pulsed near-infrared YAG laser used in Examples of Patent Literature 1 has a small highest peak output due to a pulse width as wide as approximately 200 msec, though this laser has a relatively large average output. Also, the laser has an insufficient energy for processing materials having low optical absorption characteristics with a reduced amount of a near-infrared absorber added. A further problem of the laser is a very low oscillation frequency of 10 Hz, leading to a very low processing rate.

On the other hand, continuous wave near-infrared laser having a large average output or pulsed near-infrared laser having an excessively large highest peak output has a large energy and causes heat fusion, etc. in materials to be engraved. A problem of this laser is to incur the formation of depressions with an excessive dimension or the occurrence of pattern edge sagging, leading to the difficult formation of fine patterns.

### Citation List

### Patent Literature

Patent Literature 1: Japanese Patent No. 2846954

### Summary of Invention

### Problems To Be Solved By The Invention

In response to the problems mentioned above, there is a demand for a laminate for printing plate preparation that is capable of forming a fine pattern on a printing original plate containing a cured photosensitive resin, and is capable of improving the efficiency of a plate making process, and a method for producing a printing plate using this laminate.

Accordingly, an object of the present invention is to provide a laminate that is applicable to a method for producing a printing plate by use of a laser engraving method of forming a fine indented pattern through irradiation with ultrashort pulsed laser beam, and also to provide a method for producing a printing plate with improved efficiency of a plate making process.

### Means For Solving The Problems

The present inventors have conducted diligent studies to attain the object, and have consequently completed the present invention by finding that the object can be attained by a laminate comprising: a support; a printing original plate; and a protection film, wherein the printing original plate is a printing original plate for indented pattern formation using ultrashort pulsed laser beam, and comprises a cured resin obtained by curing a photosensitive resin through an entire surface exposure.

Specifically, the present invention is as described below.
[1] A laminate comprising:
   a support; a printing original plate; and a protection film, wherein
   the printing original plate comprises a cured resin obtained by curing a photosensitive resin through an entire surface exposure on a side facing the protection film.
[2] A laminate comprising:
   a support; a printing original plate; and a protection film, wherein
   the printing original plate is a printing original plate for indented pattern formation using an ultrashort pulsed laser beam.
[3] The laminate according to [1] or [2], wherein
   the printing original plate has a storage modulus G' of 5.00 × 10⁴ Pa or more and 1.00 × 10⁶ Pa or less at 140°C.
[4] The laminate according to any one of [1] to [3], wherein
   the printing original plate has a MFR of 0 or more and 20 (g/10 min) or less.
[5] The laminate according to any one of claims [1] to [4], wherein
   the printing original plate is a printing original plate for indented pattern formation using an ultrashort pulsed laser beam.
[6] The laminate according to any one of claims [1] to [5], wherein
   the printing original plate has a laser beam transmittance of 10% or more and 99.9% or less at a wavelength of an ultrashort pulsed laser beam for the indented pattern formation.
[7] The laminate according to any one of claims [1] to [6], wherein
   the printing original plate has a laser beam transmittance of more than 75% and 99.9% or less at a wavelength of an ultrashort pulsed laser beam for the indented pattern formation.
[8] The laminate according to any one of claims [1] to [7], wherein
   the printing original plate comprises a photosensitive resin having photodegradability, photopolymerizability, or photocrosslinkability at a time of irradiation with chemoradiation.
[9] A method for producing a printing plate, comprising
   a laser engraving step of forming an indented pattern on a surface of the printing original plate in the laminate according to any one of claims [1] to [8] using an ultrashort pulsed laser beam.
[10] The method for producing the printing plate according to [9], wherein
   the printing original plate has a storage modulus G' of 5.00 × 10⁴ Pa or more and 1.00 × 10⁶ Pa or less at 140°C.
[11] The method for producing the printing plate according to [9] or [10], wherein
   a rate of overlap between successive pulses of the ultrashort pulsed laser beam is 50% or more and 99% or less.
[12] The method for producing the printing plate according to any one of [9] to [11], wherein
   in the step of forming an indented pattern on a surface of the printing original plate using the ultrashort pulsed laser beam, with a lens having a numerical aperture (NA) of 0.010 or more and 0.100 or less.
[13] The method for producing the printing plate according to any one of [9] to [12], wherein
   a depth of focus of the ultrashort pulsed laser beam is 25 µm or more and 700 µm or less from a surface of the printing original plate.
[14] The method for producing the printing plate according to any one of claims [9] to [13], wherein
   the printing original plate has a laser beam transmittance of 10% or more and 99.9% or less, at a wavelength of an ultrashort pulsed laser beam for use in the laser engraving step.
[15] The method for producing the printing plate according to any one of [9] to [14], wherein
   the printing original plate has a laser beam transmittance of more than 75% and 99.9% or less, at a wavelength of an ultrashort pulsed laser beam for use in the laser engraving step.
[16] The method for producing the printing plate according to any one of [9] to [15], wherein
   an average output of a laser source of the ultrashort pulsed laser beam for use in the laser engraving step is 0.01 W or more and less than 1000 W.
[17] The method for producing the printing plate according to any one of [9] to [16], wherein
   a pulse width of the ultrashort pulsed laser beam for use in the laser engraving step is 1 femtosecond or more and 200 nanoseconds or less.
[18] The method for producing the printing plate according to any one of [9] to [17], wherein
   an oscillation wavelength of the ultrashort pulsed laser beam for use in the laser engraving step is 300 nm or more and 1.5 µm or less.
[19] The method for producing the printing plate according to any one of [9] to [18], wherein
   an oscillation wavelength of the ultrashort pulsed laser beam for use in the laser engraving step is 300 nm or more and less than 700 nm.
[20] The method for producing the printing plate according to any one of [9] to [19], wherein
   an energy per pulse of the ultrashort pulsed laser beam for use in the laser engraving step is 1 µJ or more and 100 kJ or less.
[21] The method for producing the printing plate according to any one of [9] to [20], wherein
   a repetition frequency of the ultrashort pulsed laser beam for use in the laser engraving step is 20 kHz or more and 500 MHz or less.

### Advantageous Effects of Invention

The present invention can provide a laminate for printing plate preparation that is capable of forming a fine pattern on a printing original plate containing a cured photosensitive resin, and is capable of improving the efficiency of a plate making process, and a method for producing a printing plate using this laminate.

### Description of Embodiments

Hereinafter, the mode for carrying out the present invention (hereinafter, simply referred to as the "present embodiment") will be described in detail.

The present embodiment given below is an example for illustrating the present invention, and does not intend to limit the present invention to the contents given below. The present invention can be carried out by appropriately making changes or modifications within the range of the gist of the present invention. n.

### [Laminate]

### (First laminate)

The first laminate of the present embodiment comprises a support; a printing original plate; and a protection film, wherein the printing original plate comprises a resin composition obtained by curing a photosensitive resin through an entire surface exposure on a side facing the protection film. Specifically, the printing original plate has outermost surface cured through an entire surface exposure at least on a side facing the protection film. The photosensitive resin of the printing original plate is preferably also cured through an entire surface exposure in the thickness direction.

### (Second laminate)

The second laminate of the present embodiment is a laminate comprising: a support; a printing original plate; and a protection film, wherein the printing original plate is a printing original plate for indented pattern formation using ultrashort pulsed laser beam.

In the laminate of the present embodiment, the "ultrashort pulsed laser beam" means a pulsed laser beamof an electromagnetic wave whose width is on the order of several hundreds of picoseconds or less, and includes pulsed laser beam whose width is on the order of femtoseconds to attoseconds.

The first laminate and the second laminate (hereinafter, also simply referred to as the laminate) of the present embodiment are capable of forming a fine pattern on a printing original plate and are capable of improving the plate making efficiency of a printing plate.

### (Support)

The support constituting the laminate of the present embodiment is not particularly limited as long as the support can support a printing original plate containing a photosensitive resin or a printing original plate containing a cured photosensitive resin.

Examples of the material of the support include, but are not limited to, polyester resin, polyimide resin, polyamide resin, polyamide-imide resin, polyetherimide resin, polybismaleimide resin, polysulfone resin, polycarbonate resin, polyphenylene ether resin, polyphenylene thioether resin, polyethersulfone resin, liquid crystal resin consisting of aromatic polyester resin, aromatic polyamide resin, and epoxy resin.

The support is not particularly limited by its shape, thickness, or dimension, and a form appropriate for a purpose can be selected. Preferred examples of the form include sheet-like and cylindrical shapes.

The support for use in the laminate of the present embodiment in a sheet-like or cylindrical form will be described in detail in the following section (Printing original plate).

### (Printing original plate)

The printing original plate constituting the laminate of the present embodiment is preferably a printing original plate for indented pattern formation using ultrashort pulsed laser beam mentioned later, and comprises a cured resin obtained by curing a photosensitive resin through an entire surface exposure on the side facing the protection film. The photosensitive resin is preferably also cured through an exposure in the thickness direction.

The material constituting the printing original plate may contain a photosensitive resin as well as a photopolymerization initiator, a dye as a near-infrared absorber, an inorganic porous material, and the like mentioned later. Specifically, the printing original plate is preferably in the form of a cured photosensitive resin composition containing a photosensitive resin as well as these components.

The cured resin can be a cured photosensitive resin having laser beam permeability in a near-infrared region and an ultraviolet region. For example, a cured photosensitive resin obtained by photocuring a photosensitive resin such as a photosensitive solid resin or a photosensitive liquid resin composed mainly of a thermoplastic resin can be used.

The cured photosensitive resin is preferably obtained by molding and photocuring a photosensitive resin composition that is liquid at 140°C. This can attain favorable thickness accuracy and dimension accuracy in molding the printing original plate into a sheet-like or cylindrical form.

The photosensitive resin composition preferably has a viscosity of 10 Pa·s or more and 10 kPa·s or less, more preferably 50 Pa·s or more and 5 kPa·s or less, at 140°C. With the viscosity being 10 Pa·s or more, the prepared printing original plate has a sufficient mechanical strength, and easily maintains its shape and is easily processed even when molded into a cylindrical printing original plate.

The viscosity of 10 kPa·s or less at 140°C of the photosensitive resin composition is preferred from the viewpoint of easy deformation and easy processing in preparing the laminate at 140°C or higher, easy molding into a sheet-like or cylindrical printing original plate, and a convenient molding process.

Particularly, for obtaining a cylindrical printing original plate having high plate thickness accuracy, the viscosity at 140°C is preferably 10 Pa·s or more, more preferably 100 Pa·s or more, further preferably 200 Pa·s or more, still further preferably 300 Pa·s or more, in order to prevent dripping, etc. in forming a liquid photosensitive resin composition layer on a cylindrical support.

Particularly, when the photosensitive resin composition for use in the printing original plate of the present embodiment is liquid at 140°C, the photosensitive resin composition preferably has thixotropic properties from the viewpoint that a predetermined thickness can be maintained without causing dripping due to gravity in forming a photosensitive resin composition layer on a cylindrical support.

The printing original plate constituting the laminate of the present embodiment preferably comprises a photosensitive resin having photodegradability, photopolymerizability, or photocrosslinkability at the time of irradiation with chemoradiation.

The chemoradiation refers to electromagnetic radiation such as gamma ray, X ray, ultraviolet ray, near-ultraviolet ray, visible light, or near-infrared ray.

With the photosensitive resin having photodegradability at the time of irradiation with chemoradiation, the solubility of the photosensitive resin in a solvent or its volatility can be enhanced. This produces an effect of facilitating the formation of an indented pattern on the surface of the printing original plate. Examples of such a photosensitive resin include photoresists and photosensitive polyimide.

With the photosensitive resin having photopolymerizability or photocrosslinkability at the time of irradiation with chemoradiation, the photosensitive resin obtains swelling resistance at the time of immersion in a solvent or a heat resistance improving effect when stored in a high-temperature environment. Examples of such a photosensitive resin include photosensitive resin s for use in existing original plates for flexographic printing plates.

The printing original plate constituting the laminate of the present embodiment preferably contains a thermoplastic elastomer (a) which is a polymer that is plasticized at a high temperature so as to be moldable and exhibits properties as elastic rubber at ordinary temperature, from the viewpoint of favorable engravability with ultrashort pulsed laser beam, mechanical physical properties, and solvent resistance.

The thermoplastic elastomer (a) preferably comprises a polymer block based on at least one vinyl aromatic hydrocarbon unit (hereinafter, simply referred to as vinyl aromatic hydrocarbon) and a polymer block based on at least one conjugated diene unit (hereinafter, simply referred to as conjugated diene), from the viewpoint of molding processability, a shortened plate making time, and the image reproducibility of a printing plate.

In the present specification, the term "based" means that the polymer block contains 50% by mass or more of the component.

Examples of the vinyl aromatic hydrocarbon include, but are not limited to, monomers such as styrene, p-methylstyrene, tertiary butylstyrene, α-methylstyrene, 1,1-diphenylethylene, and vinyltoluene. Particularly, styrene is preferred. One of these monomers may be used singly, or two or more thereof may be used in combination.

Examples of the conjugated diene include, but are not limited to, butadiene and isoprene. Particularly, butadiene is preferred from the viewpoint of abrasion resistance. One of these monomers may be used singly, or two or more thereof may be used in combination. A double bond in the conjugated diene may be hydrogenated, if necessary, in order to further improve solvent resistance.

The photosensitive resin composition for use in the printing original plate preferably comprises the thermoplastic elastomer (a) which is a polymer compound, an organic compound (b) having a polymerizable unsaturated group in a molecule, and a photopolymerization initiator (c).

The thermoplastic elastomer (a) is preferably a compound having a number-average molecular weight of 1000 or higher and 300000 or lower. The number-average molecular weight of the thermoplastic elastomer (a) is more preferably 2000 or higher and 200000 or lower, further preferably 50000 or higher and 150000 or lower.

The number-average molecular weight of 1000 or higher of the thermoplastic elastomer (a) is preferred from the viewpoint that a printing original plate prepared by crosslinking in a later step keeps sufficient strength and a printing plate with a relief image prepared from this printing original plate endures repetitive use.

The number-average molecular weight of 300000 or lower of the thermoplastic elastomer (a) is preferred from the viewpoint that a sheet-like or cylindrical printing original plate can be easily prepared without excessively elevating the viscosity of the photosensitive resin composition at the time of molding processing.

In the present specification, the number-average molecular weight is a value calculated by measurement using gel permeation chromatography and calibration with polystyrene having a known molecular weight.

The thermoplastic elastomer (a) may be a compound having a polymerizable unsaturated group in a molecule. The thermoplastic elastomer has a large number-average molecular weight as compared with the "organic compound (b) having a polymerizable unsaturated group in a molecule", and is thus distinguished from the organic compound (b).

The "polymerizable unsaturated group" is a polymerizable unsaturated group that is capable to be involved in radical polymerization reaction or addition polymerization reaction.

Examples of the polymerizable unsaturated group that is capable to be involved in radical polymerization reaction include, but are not limited to, a vinyl group, an acetylene group, an acrylic group, and a methacrylic group.

Preferred examples of the polymerizable unsaturated group that is capable to be involved in addition polymerization reaction include, but are not limited to, a cinnamoyl group, a thiol group, an azide group, an epoxy group capable of ring-opening addition reaction, an oxetane group, a cyclic ester group, a dioxirane group, a spiro orthocarbonate group, a spiro orthoester group, a bicyclo orthoester group, and a cyclic imino ether group.

The thermoplastic elastomer (a) is particularly preferably a polymer having 0.7 or more polymerizable unsaturated groups on average per molecule. The number of polymerizable unsaturated groups per molecule is more preferably more than 1.

0.7 or more polymerizable unsaturated groups on average per molecule are preferred from the viewpoint that the printing original plate obtained from the photosensitive resin composition is excellent in mechanical strength and a relief shape is less likely to collapse at the time of engraving with ultrashort pulsed laser beam. This is also preferred from the viewpoint that the printing original plate has favorable durability and endures repetitive use.

The polymerizable unsaturated group in the thermoplastic elastomer (a) is preferably positioned at an end of the polymer backbone, at an end of a polymer side chain, in the polymer backbone, or in a polymer side chain in a directly bonded form.

The average number of polymerizable unsaturated groups in one molecule of the thermoplastic elastomer (a) can be determined by a molecular structure analysis method based on nuclear magnetic resonance spectroscopy (NMR method).

Particularly, a preferred method for introducing a polymerizable unsaturated group to a molecular end of the thermoplastic elastomer (a) is the following method.

Specifically, the molecular weight of the thermoplastic elastomer (a) that has a plurality of reactive groups such as a hydroxy group, an amino group, an epoxy group, a carboxyl group, an acid anhydride group, a ketone group, a hydrazine residue, an isocyanate group, an isothiocyanate group, a cyclic carbonate group, or an alkoxycarbonyl group and has a molecular weight on the order of several thousands is first adjusted through the reaction of the reactive groups of the thermoplastic elastomer (a) with a binder (e.g., polyisocyanate for a hydroxy group or an amino group) having a plurality of groups capable of binding to the reactive groups of the thermoplastic elastomer (a) component. Next, the terminal group of the thermoplastic elastomer (a) is converted to a binding group.

In this method, the thermoplastic elastomer (a) is then reacted with an organic compound having a group reactive with the terminal binding group of the thermoplastic elastomer (a), and a predetermined polymerizable unsaturated group to introduce the polymerizable unsaturated group to the end of the thermoplastic elastomer (a).

The "thermoplastic elastomer (a)" is preferably a compound having a carbonate group, a carbamate group, or a methacrylic group in the polymer backbone, because of high pyrolysis resistance.

Examples of the polymer having favorable pyrolysis resistance can include polyester synthesized from (poly)carbonate diol or (poly)carbonate dicarboxylic acid as a starting material, and polyamide synthesized from polyurethane or (poly)carbonate diamine as a starting material. Such a polymer may contain a polymerizable unsaturated group in the backbone and/or a side chain.

When the thermoplastic elastomer (a) has a reactive functional group such as a hydroxy group, an amino group, or a carboxyl group at its end, a polymerizable unsaturated group is also easily introduced to the backbone end of the thermoplastic elastomer (a).

The "thermoplastic elastomer (a)" is particularly preferably a compound that has at least one type of bond selected from a carbonate bond and an ester bond in a molecule and has at least one type of bond selected from a urethane bond, a urea bond and an amide bond. Use of such a compound produces a printing original plate having more favorable laser engravability, mechanical physical properties, and solvent resistance.

Other examples of the thermoplastic elastomer (a) also include polymer compounds obtained by using a polymer compound having no polymerizable unsaturated group as a starting material, and introducing a polymerizable unsaturated group into its molecule through chemical reaction such as substitution reaction, elimination reaction, condensation reaction, or addition reaction.

Examples of the polymer compound having no polymerizable unsaturated group as a starting material include: polyolefins such as polyethylene and polypropylene; polyhaloolefins such as polyvinyl chloride and polyvinylidene chloride; polymers with a C-C linkage such as polystyrene, polyacrylonitrile, polyvinyl alcohol, polyvinyl acetate, polyvinylacetal, polyacrylic acid, poly(meth)acrylic acid esters, poly(meth)acrylamide, and polyvinyl ether; polyethers such as polyphenylene ether; polythioethers such as polyphenylene thioether; polyester such as polyethylene terephthalate; polymer compounds such as polycarbonate, polyacetal, polyurethane, polyamide, polyurea, polyimide, and polydialkylsiloxane, and polymer compounds having a heteroatom in the backbones of these polymer compounds; and random copolymers and block copolymers synthesized from a plurality of monomer components.

Furthermore, a mixture of a plurality of polymer compounds each containing a polymerizable unsaturated group in a molecule may be used as the thermoplastic elastomer (a).

Particularly, the laminate of the present embodiment for use in a flexographic printing plate requires a flexible relief image. Therefore, the thermoplastic elastomer (a) preferably contains a liquid resin having a glass transition temperature of 20°C or lower, and more preferably contains a liquid resin having a glass transition temperature of 0°C or lower.

The content of the liquid resin is preferably 5% by mass or more based on the whole thermoplastic elastomer (a).

Examples of such a liquid resin include, but are not limited to: hydrocarbons such as polyethylene, polybutadiene, hydrogenated polybutadiene, polyisoprene, hydrogenated polyisoprene, and liquid paraffin; polyesters such as adipate and polycaprolactone; polyethers such as polyethylene glycol, polypropylene glycol, and polytetramethylene glycol; silicones such as aliphatic polycarbonate and polydimethylsiloxane; polymers of (meth)acrylic acid and/or derivatives thereof; and compounds each having a polymerizable unsaturated group in a molecule synthesized using mixtures thereof or copolymers.

The liquid resin is particularly preferably polyethylene, polybutadiene, or hydrogenated polybutadiene from the viewpoint of weather resistance.

In the present specification, the liquid resin means a polymer having properties by which the resin easily undergoes flow deformation and can be solidified into the deformed shape by cooling. This term corresponds to an elastomer having properties of deforming instantly in response to applied external force and recovering the original shape in a short time by the removal of the external force.

With the thermoplastic elastomer (a) containing a liquid resin having a glass transition temperature of 20°C or lower, the photosensitive resin composition is easily adjusted to a liquid state at 140°C. This produces favorable thickness accuracy and dimension accuracy in molding the printing original plate, which is a cured product of the photosensitive resin composition, into a sheet-like or cylindrical form.

The organic compound (b) contained in the photosensitive resin composition is a compound having a polymerizable unsaturated group in a molecule.

The number-average molecular weight of the organic compound (b) is preferably less than 1000 from the viewpoint of easy mixing with the thermoplastic elastomer (a) mentioned above.

The polymerizable unsaturated group is defined as a polymerizable unsaturated group that is capable to be involved in radical polymerization reaction or addition polymerization reaction, as described in the part about the thermoplastic elastomer (a).

Examples of the polymerizable unsaturated group that is capable to be involved in radical polymerization reaction include, but are not limited to, a vinyl group, an acetylene group, an acrylic group, and a methacrylic group.

Examples of the polymerizable unsaturated group that is capable to be involved in addition polymerization reaction include, but are not limited to, a cinnamoyl group, a thiol group, an azide group, an epoxy group capable of ring-opening addition reaction, an oxetane group, a cyclic ester group, a dioxirane group, a spiro orthocarbonate group, a spiro orthoester group, a bicyclo orthoester group, and a cyclic imino ether group.

When the organic compound (b) is a radical reactive compound, examples of the organic compound (b) include, but are not limited to: olefins such as ethylene, propylene, styrene, and divinylbenzene; acetylenes, (meth)acrylic acid and derivatives thereof; haloolefins; unsaturated nitriles such as acrylonitrile; (meth)acrylamide and derivatives thereof; aryl compounds such as aryl alcohol and aryl isocyanate; unsaturated dicarboxylic acid such as maleic anhydride, maleic acid, and fumaric acid, and derivatives thereof; and vinyl acetates, N-vinylpyrrolidone, and N-vinylcarbazole. (Meth)acrylic acid and derivatives thereof are preferred from the viewpoint of different varieties, price, and polymerization reactivity thereof.

Examples of the derivatives of these various compounds include: compounds having an alicyclic skeleton such as cycloalkyl-, bicycloalkyl-, cycloalkene-, or bicycloalkene-; compounds having an aromatic skeleton such as benzyl-, phenyl-, phenoxy-, or fluorene-; compounds having an alkyl group, an alkyl halide group, an alkoxyalkyl group, a hydroxyalkyl group, an aminoalkyl group, or a glycidyl group; ester compounds with polyhydric alcohols such as alkylene glycol, polyoxyalkylene glycol, polyalkylene glycol, and trimethylolpropane; and compounds having a polysiloxane structure such as polydimethylsiloxane or polydiethylsiloxane.

Alternatively, the organic compound (b) may be a heteroaromatic compound containing an element such as nitrogen or sulfur.

Examples of the compound having an epoxy group capable of addition polymerization reaction as the organic compound (b) include, but are not limited to: compounds obtained through the reaction of various polyols such as diols or triols with epichlorohydrin; and epoxy compounds obtained through the reaction of an intramolecular ethylene bond with a peracid.

Examples of such an organic compound (b) specifically include epoxy compounds such as ethylene glycol diglycidyl ether, diethylene glycol diglycidyl ether, triethylene glycol diglycidyl ether, tetraethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerin diglycidyl ether, glycerin triglycidyl ether, trimethylolpropane triglycidyl ether, bisphenol A diglycidyl ether, hydrogenated bisphenol A diglycidyl ether, diglycidyl ether of a compound with ethylene oxide or propylene oxide added to bisphenol A, polytetramethylene glycol diglycidyl ether, poly(propylene glycol adipate)diol diglycidyl ether, poly(ethylene glycol adipate)diol diglycidyl ether, and poly(caprolactone)diol diglycidyl ether, and epoxy-modified silicone oil (e.g., manufactured by Shin-Etsu Chemical Co., Ltd., brand name "HF-105").

The organic compound (b) having a polymerizable unsaturated group to be contained in the photosensitive resin composition can be selected as one or two or more compounds according to the purpose thereof.

For preventing a printing plate produced using the laminate of the present embodiment from being swollen in an organic solvent, such as an alcohol or ester, which is a solvent of printing ink, it is preferred to use at least one type of derivative of a long-chain aliphatic, alicyclic or aromatic compound as the organic compound (b).

For enhancing the mechanical strength of a printing plate produced using the laminate of the present embodiment, it is preferred to use at least one type of derivative of an alicyclic or aromatic compound as the organic compound (b).

In such a case, the content of the derivative of the long-chain aliphatic, alicyclic or aromatic compound is preferably 2% by mass or more, more preferably 5% by mass or more, based on the total amount of the organic compound (b).

The derivative of the aromatic compound may be an aromatic compound containing an element such as nitrogen or sulfur.

The printing original plate constituting the laminate of the present embodiment comprises a cured resin obtained by curing a photosensitive resin through an entire surface exposure on aside facing the protection film, as described above, and is particularly preferably in a form also cultured through exposure in the thickness direction. From such a viewpoint, the photosensitive resin composition is preferably supplemented with a photopolymerization initiator (c).

The photopolymerization initiator (c) can be selected from initiators generally used. Examples of the photopolymerization initiator that can be used include, but are not limited to, radical polymerization, cationic polymerization, or anionic polymerization initiators listed in "Polymer Data Handbook - Basics" edited by The Society of Polymer Science, Japan, published by Baifukan Co., Ltd. in 1986.

Crosslinking performed by photopolymerization using the photopolymerization initiator is useful from the viewpoint that the printing original plate can be produced with high productivity while the storage stability of the photosensitive resin composition is maintained.

As for a photopolymerization initiator that induces radical polymerization reaction, a hydrogen-withdrawing photopolymerization initiator (d) or a degradable photopolymerization initiator (e) is used as a particularly effective photopolymerization initiator.

The hydrogen-withdrawing photopolymerization initiator (d) is not particularly limited, and aromatic ketone is preferably used.

The aromatic ketone efficiently becomes an excited triplet state by light excitation, and this excited triplet state abstracts hydrogen from an ambient medium to form a radical. The formed radical is considered to participate in photocrosslinking reaction.

Examples of the aromatic ketone include, but are not limited to, benzophenones, Michler's ketones, xanthenes, thioxanthones, and anthraquinones. At least one type of compound selected from such a group is preferably used.

The benzophenones refer to benzophenone and derivatives thereof. Examples thereof specifically include 3,3',4,4'-benzophenone tetracarboxylic anhydride and 3,3',4,4'-tetramethoxybenzophenone.

The Michler's ketones refer to Michler's ketone and derivatives thereof.

The xanthenes refer to xanthene, and derivatives thereof in which hydrogen is replaced with an alkyl group, a phenyl group, or a halogen group.

The thioxanthones refer to thioxanthone, and derivatives thereof in which hydrogen is replaced with an alkyl group, a phenyl group, or a halogen group. Examples thereof specifically include ethylthioxanthone, methylthioxanthone, and chlorothioxanthone.

The anthraquinones refer to anthraquinone, and derivatives thereof in which hydrogen is replaced with an alkyl group, a phenyl group, or a halogen group.

The amount of the hydrogen-withdrawing photopolymerization initiator (d) added is preferably 0.1% by mass or more and 10% by mass or less, more preferably 0.5% by mass or more and 5% by mass or less, based on the total amount of the photosensitive resin composition. With the amount of this initiator added falling within this range, the photosensitive resin composition can sufficiently secure the curability of cured surface when photocured in the atmosphere, and can also secure low weather resistance.

The degradable photopolymerization initiator (e) refers to a compound that forms an active radical through intramolecular cleavage reaction after light absorption. Examples of this degradable photopolymerization initiator (e) include, but are not limited to, compounds such as benzoin alkyl ethers, 2,2-dialkoxy-2-phenylacetophenones, acetophenones, acyl oxime esters, azo compounds, organic sulfur compounds, and diketones. At least one type of compound selected from such a group is preferably used.

Examples of the benzoin alkyl ethers include benzoin isopropyl ether, benzoin isobutyl ether, and compounds described in "Kankousei Koubunshi (photosensitive polymer in English)" (Kodansha Ltd., published in 1977, p. 228).

Examples of the 2,2-dialkoxy-2-phenylacetophenones include 2,2-dimethoxy-2-phenylacetophenone and 2,2-diethoxy-2-phenylacetophenone.

Examples of the acetophenones include acetophenone, trichloroacetophenone, 1-hydroxycyclohexylphenylacetophenone, and 2,2-diethoxyacetophenone.

Examples of the acyl oxime esters include 1-phenyl-1,2-propanedione-2-(o-benzoyl) oxime.

Examples of the azo compounds include azobisisobutyronitrile, diazonium compounds, and tetrazene compounds.

Examples of the organic sulfur compounds include aromatic thiol, mono- and disulfides, thiuram sulfide, dithiocarbamate, S-acyl dithiocarbamate, thiosulfonate, sulfoxide, sulfenate, and dithiocarbonate.

Examples of the diketones include benzyl and methylbenzoyl formate.

The amount of the degradable photopolymerization initiator (e) added is preferably 0.1% by mass or more and 10% by mass or less, more preferably 0.3% by mass or more and 3% by mass or less, based on the total amount of the photosensitive resin composition. With the amount of this initiator added falling within this range, the photosensitive resin composition can sufficiently secure the curability of cured inside when photocured in the atmosphere.

A compound having a site functioning as a hydrogen-withdrawing photopolymerization initiator and a site functioning as a degradable photopolymerization initiator in one molecule may be used as the photopolymerization initiator (c) instead of the hydrogen-withdrawing photopolymerization initiator (d) and the degradable photopolymerization initiator (e).

Examples of such a photopolymerization initiator include α-aminoacetophenones and specifically include 2-methyl-1-(4-methylthiophenyl)-2-morpholino-propan-1-one and compounds represented by the following general formula (1): 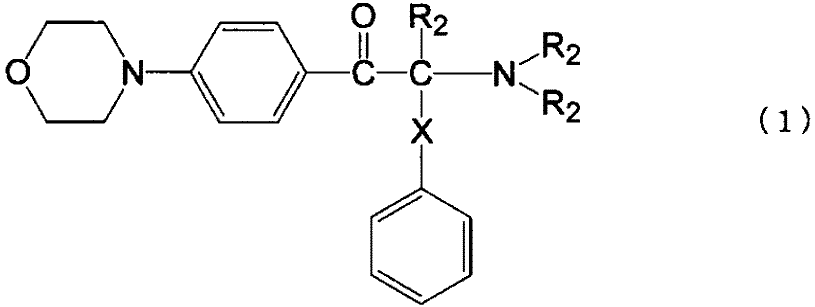 wherein each R₂ independently represents a hydrogen atom or an alkyl group having 1 to 10 carbon atoms, and X represents an alkylene group having 1 to 10 carbon atoms.

The amount of the compound having a site functioning as a hydrogen-withdrawing photopolymerization initiator and a site functioning as a degradable photopolymerization initiator in one molecule added is preferably 0.1% by mass or more and 10% by mass or less, more preferably 0.3% by mass or more and 3% by mass or less, based on the total amount of the photosensitive resin composition.

The amount of this compound added that falls within the range described above is preferred from the viewpoint that the photosensitive resin composition can sufficiently secure the mechanical physical properties of the cured resin even when photocured in the atmosphere.

Alternatively, a photopolymerization initiator that induces addition polymerization reaction by generating an acid through light absorption may be used as the photopolymerization initiator. Examples of such a photopolymerization initiator include, but are not limited to, cationic photopolymerization initiators such as aromatic diazonium salt, aromatic iodonium salt, and aromatic sulfonium salt, and polymerization initiators that generate a base through light absorption. The amount of such a photopolymerization initiator added is preferably 0.1% by mass or more and 10% by mass or less based on the total amount of the photosensitive resin composition.

The photosensitive resin for use in the printing original plate constituting the laminate of the present embodiment may contain a near-infrared absorber without impairing the object of the present invention.

The content of the near-infrared absorber is preferably 20000 ppm or less, more preferably 10000 ppm or less, further preferably 50 ppm or less, in the photosensitive resin composition from the viewpoint of securing the mechanical physical properties of the printing original plate.

Examples of the near-infrared absorber include, but are not limited to: cyanine dyes such as phthalocyanine dyes and heptamethine cyanine dyes; oxonol dyes such as pentamethine oxonol dyes; and indolium dyes, benzindolium dyes, benzothiazolium dyes, quinolinium dyes, and phthalide compounds reacted with developers. Not all cyanine dyes have the optical absorption characteristics mentioned above. The optical absorption characteristics vary exceedingly largely depending on the type and intramolecular position of a substituent, the number of conjugated bonds, the type of a counterion, an ambient environment where the dye molecule exists, etc.

Alternatively, a generally commercially available laser dye, oversaturated absorbing dye, or near-infrared absorbing dye may be used.

A dye compound that has heretofore been known in the art and is commercially available can be appropriately used as the laser dye, the near-infrared absorbing dye, or the phthalide compound reacted with a developer.

In the case of using, as the near-infrared absorber, a dye that reacts with the photosensitive resin composition such that its light absorption wavelength is changed, this dye may be used in a state contained in a microcapsule.

Fine ion exchanger particles with a metal ion such as copper, tin, indium, yttrium, or a rare earth element adsorbed thereon may be used as the near-infrared absorber. The fine ion exchanger particles may be organic fine resin particles or may be inorganic fine particles.

The photosensitive resin composition for use in the printing original plate of the laminate of the present embodiment may be supplemented with an inorganic porous material (f).

The inorganic porous material(f) is inorganic particles having micropores or having very small voids.

The number-average particle size of the inorganic porous material (f) is preferably 0.1 to 100 µm, more preferably 0.5 to 20 µm, further preferably 3 to 10 µm. The average particle size of the inorganic porous material (f) can be measured using a laser scanning particle size distribution measurement apparatus.

The specific surface area of the inorganic porous material (f) is preferably 10 m²/g or larger and 1500 m²/g or smaller, more preferably 100 m²/g or larger and 800 m²/g or smaller.

The specific surface area of the inorganic porous material (f) can be measured according to a BET equation from the adsorption isotherm of nitrogen at -196°C.

The average pore size of the inorganic porous material (f) is preferably 1 nm or larger and 1000 nm or smaller, more preferably 2 nm or larger and 200 nm or smaller, further preferably 2 nm or larger and 50 nm or smaller.

The average pore size can be measured by use of a nitrogen adsorption method.

The pore size distribution of the inorganic porous material (f) can be determined from the adsorption isotherm of nitrogen at -196°C.

The pore volume of the inorganic porous material (f) is preferably 0.1 mL/g or larger and 10 mL/g or smaller, more preferably 0.2 mL/g or larger and 5 mL/g or smaller. The pore volume can be measured by use of a nitrogen adsorption method and is determined from the adsorption isotherm of nitrogen at -196°C.

The amount of oil absorbed by the inorganic porous material (f) is preferably in the range of 10 mL/100 g or more and 2000 mL/100 g or less, more preferably in the range of 50 mL/100 g or more and 1000 mL/100 g or less. The amount of oil absorbed can be measured in accordance with JIS-K5101.

In the case of allowing the inorganic porous material (f) to be contained in the photosensitive resin composition for use in the printing original plate constituting the laminate of the present embodiment, the particle shape of the inorganic porous material (f) is not particularly limited. Examples thereof include spherical, flattened, needle-like, or amorphous particles, and particles having a projection on the surface.

Examples of the inorganic porous material (f) include, but are not limited to, porous silica, mesoporous silica, silica-zirconia porous gel, porous alumina, and porous glass.

One type of inorganic porous material (f) may be used singly, or two or more types of inorganic porous materials (f) may be used in combination.

The amounts of the thermoplastic elastomer (a) and the organic compound (b) in the photosensitive resin composition are usually preferably in the range of 5 to 200 parts by mass, more preferably 20 to 100 parts by mass, of the organic compound (b) per 100 parts by mass of the thermoplastic elastomer (a).

When the proportion of the organic compound (b) is 5 parts by mass or more, the resulting printing plate, etc. has favorable balance between hardness and tensile strength and elongation. When the proportion is 200 parts by mass or less, shrinkage during crosslinking curing can be reduced and thickness accuracy is favorable.

The photosensitive resin composition can be blended with various additives such as a polymerization inhibitor, an ultraviolet absorber, a colorant, a pigment, a lubricant, a surfactant, a plasticizer, and a fragrance according to a purpose or an object without impairing the object of the present invention.

The printing original plate constituting the laminate of the present embodiment is obtained by photocuring the photosensitive resin composition. In this respect, the photosensitive resin composition may be molded into a sheet-like or cylindrical form and then photocured.

An existing resin molding method can be used as a method for molding the photosensitive resin composition into a sheet-like or cylindrical form. Examples thereof include a casting method, a method of extruding a resin from a nozzle or a die using a machine such as a pump or an extruder, and adjusting the thickness of the extrudate, and a method of calendar-processing a resin with a roll, and adjusting the thickness of the product. In this respect, the photosensitive resin composition may be molded while heated without deteriorating its performance. For example, rolling treatment or grinding treatment may be carried out, if necessary. Usually, a photosensitive resin composition layer is often formed on a sheet-like support made of a material such as PET or nickel either via an adhesive layer or directly without the mediation of an adhesive layer. The photosensitive resin composition layer may be formed directly on a cylinder of a printer. Alternatively, a fiber-reinforced plastic (FRP), plastic, or metal cylindrical support may be used. The cylindrical support used may be hollow with a constant thickness for weight reduction. The role of the sheet-like support or the cylindrical support is to secure the dimension stability of the printing original plate. Thus, a support having high dimension stability is preferably selected.

When the cylindrical support or the sheet-like support is evaluated using a coefficient of linear thermal expansion, the coefficient of linear thermal expansion is preferably 100 ppm/°C or less, more preferably 70 ppm/°C or less. This produces a printing original plate having high dimension stability.

Examples of the material of the cylindrical support or the sheet-like support include, but are not limited to, polyester resin, polyimide resin, polyamide resin, polyamide-imide resin, polyetherimide resin, polybismaleimide resin, polysulfone resin, polycarbonate resin, polyphenylene ether resin, polyphenylene thioether resin, polyethersulfone resin, liquid crystal resin consisting of wholly aromatic polyester resin, wholly aromatic polyamide resin, and epoxy resin.

The resin mentioned above may be laminated and used as the support.

For example, a sheet laminated with a polyethylene terephthalate layer having a thickness of 50 µm may be used. Alternatively, a porous sheet, for example, cloth formed by knitting a fiber, a nonwoven fabric, or a film with pores formed thereon may be used as the sheet-like support or the cylindrical support. In the case of using a porous sheet or a porous cylinder as the sheet-like support or the cylindrical support, the pores are impregnated with the photosensitive resin composition, which can then be photocured, thereby producing high adhesiveness because the cured photosensitive resin layer is integrated with the sheet-like support or the cylindrical support.

Examples of the fiber to form the cloth or the nonwoven fabric include, but are not limited to, inorganic fibers such as glass fiber, alumina fiber, carbon fiber, alumina-silica fiber, boron fiber, high-silicon fiber, potassium titanate fiber, and sapphire fiber, natural fibers such as cotton and linen, semisynthetic fibers such as rayon and acetate, and synthetic fibers such as nylon, polyester, acryl, vinylon, polyvinyl chloride, polyolefin, polyurethane, polyimide, and aramide. Cellulose generated by bacteria is a highly crystalline nanofiber and is a material from which a thin nonwoven fabric having high dimension stability can be prepared.

Examples of the method for adjusting the coefficient of linear thermal expansion of the sheet-like support or the cylindrical support so as to be as small as 100 ppm/°C or less include a method of adding a filler into the material of the support, and a method of impregnating or coating a mesh-like cloth such as wholly aromatic polyamide, or glass cloth with a resin.

Examples of the filler include organic fine particles, inorganic fine particles such as metal oxides and metals, and organic-inorganic composite fine particles usually used. Alternatively, porous fine particles, internally hollowed-out fine particles, microcapsule particles, or layered compound particles in which a low-molecular compound intercalates into the inside may be used. Particularly, metal oxide fine particles such as alumina, silica, titanium oxide, or zeolite, latex fine particles made of a polystyrene-polybutadiene copolymer, organic fine particles of a natural product such as highly crystalline cellulose, or the like are preferred.

The sheet-like support or the cylindrical support for use in the laminate of the present embodiment in a sheet-like or cylindrical form can be improved in its adhesiveness to a photosensitive resin composition layer or an adhesive layer by the physical or chemical treatment of the surface.

Examples of the physical treatment method include, but are not limited to, a sand blast method, a wet blast method of spraying a liquid containing fine particles, a corona discharge method, a plasma treatment method, and an ultraviolet or vacuum ultraviolet irradiation method.

Examples of the chemical treatment method include, but are not limited to, a strong acid or strong alkali treatment method, an oxidizing agent treatment method, and a coupling agent treatment method.

The printing original plate constituting the laminate of the present embodiment may be obtained by crosslinking a photosensitive resin composition layer formed on a support through exposure, or may be obtained by crosslinking a photosensitive resin composition layer through light irradiation while performing molding on a support.

Examples of the light source for use in curing through a exposure include UV-LED, high-pressure mercury lamps, ultrahigh-pressure mercury lamps, ultraviolet fluorescent lamps, germicidal lamps, carbon arc lamps, xenon lamps, and metal halide lamps.

The light with which the photosensitive resin composition layer is irradiated is preferably light having a wavelength of 200 nm to 400 nm. Particularly, most of hydrogen-withdrawn photopolymerization initiators (d) have strong light absorption in this wavelength region. Therefore, when the light with which the photosensitive resin composition layer is irradiated is light having a wavelength of 200 nm to 300 nm, the curability of cured photosensitive resin layer surface can be sufficiently secured.

One type of light source may be used in curing, or two or more types of light sources differing in wavelength may be used in curing. This tends to improve the curability of the resin.

When the printing original plate constituting the laminate of the present embodiment is a printing original plate for indented pattern formation using ultrashort pulsed laser beam, the thickness of this printing original plate can be arbitrarily set according to its intended use. In the case of finally producing a printing plate, the thickness is generally in the range of 0.1 to 7 mm. The thickness of the printing original plate may be optionally adjusted by laminating a plurality of materials differing in composition.

In the laminate of the present embodiment, a cushion layer made of an elastomer may be formed beneath the printing original plate for laser engraving.

The cushion layer is preferably an elastomer layer having a Shore A hardness of 20 degrees to 70 degrees.

The Shore A hardness of 20 degrees or more is preferred because the cushion layer is moderately deformed and thus, printing quality can be secured. The Shore A hardness of 70 degrees or less is preferred because functions as the cushion layer can be exerted. The Shore A hardness is more preferably in the range of 30 degrees to 60 degrees.

Examples of the material constituting the cushion layer preferably include, but are not limited to, materials having rubber elasticity, such as thermoplastic elastomers, photocurable elastomers, and thermosetting elastomers. A layer made of a porous elastomer having fine pores of a nanometer level may be used.

Particularly, an elastomer of a photosensitive resin composition that is liquid at 140°C and is curable with light is used conveniently and preferably from the viewpoint of processability into a sheet-like or cylindrical printing plate.

Examples of the thermoplastic elastomer for use in the cushion layer include, but are not limited to, thermoplastic styrene elastomers such as SBS (polystyrene-polybutadiene-polystyrene), SIS (polystyrene-polyisoprene-polystyrene), and SEBS (polystyrene-polyethylene/polybutylene-polystyrene), thermoplastic olefin elastomers, thermoplastic urethane elastomers, thermoplastic ester elastomers, thermoplastic amide elastomers, thermoplastic silicone elastomers, and thermoplastic fluorine elastomers.

Examples of the photocurable elastomer for use in the cushion layer include mixtures of the thermoplastic elastomer with a photopolymerizable monomer, a plasticizer, and a photopolymerization initiator, and liquid compositions of a plastomer resin mixed with a photopolymerizable monomer and a photopolymerization initiator.

The cushion layer, unlike the design concept of the photosensitive resin composition for which a fine pattern forming function is an important factor, does not require forming a fine pattern using light and needs only to be able to secure mechanical strength to some extent by curing through an entire surface exposure. Therefore, the material thereof is selected with a very high degree of freedom.

Sulfur-crosslinked rubber or non-sulfur-crosslinked rubber such as organic peroxide, initial condensates of phenol resin, quinone dioxime, metal oxide, or thiourea may be used.

An elastomer prepared by three-dimensionally crosslinking telechelic liquid rubber using a predetermined curing agent can also be used.

In the laminate of the present embodiment, a predetermined modifying layer can be formed on the surface of a printing original plate for laser engraving, thereby achieving reduction in tack and improvement in ink wettability of the surface of a final printing plate of interest.

Examples of the modifying layer include coatings treated with a compound, such as a silane coupling agent or a titanium coupling agent, which reacts with a surface hydroxy group, and polymer films containing porous inorganic particles.

A compound having, in a molecule, a functional group highly reactive with a surface hydroxy group of the printing original plate can be used as a silane coupling agent widely used. Examples of the functional group highly reactive with the hydroxy group include a trimethoxysilyl group, a triethoxysilyl group, a trichlorosilyl group, a diethoxysilyl group, a dimethoxysilyl group, a dimonochlorosilyl group, a monoethoxysilyl group, a monomethoxysilyl group, and a monochlorosilyl group. At least one such functional group exists in the molecule of the compound and is fixed to the surface of the printing original plate through reaction with the surface hydroxy group of the printing original plate. A compound having at least one functional group selected from an acryloyl group, a methacryloyl group, an active hydrogen-containing amino group, an epoxy group, a vinyl group, a perfluoroalkyl group, and a mercapto group as a reactive functional group in a molecule, or a compound having a long-chain alkyl group can be used as the compound constituting the silane coupling agent.

Examples of the titanium coupling agent include, but are not limited to, isopropyltriisostearoyl titanate, isopropyl tris(dioctyl pyrophosphate) titanate, isopropyl tri(N-aminoethyl-aminoethyl) titanate, tetraoctyl bis(di-tridecyl phosphite) titanate, tetra(2,2-diallyloxymethyl-1-butyl)bis(di-tridecyl) phosphite titanate, bis(octyl pyrophosphate)oxyacetate titanate, bis(dioctyl pyrophosphate)ethylene titanate, isopropyltrioctanoyl titanate, isopropyldimethacrylisostearoyl titanate, isopropyltridodecylbenzenesulfonyl titanate, isopropylisostearoyldiacryl titanate, isopropyl tri(dioctyl sulfate) titanate, isopropyltricumylphenyl titanate, and tetraisopropyl bis(dioctyl phosphite) titanate.

In the laminate of the present embodiment, when the compound constituting the coupling agent for use in forming the modifying layer on the surface of the printing original plate has, particularly, a polymerizable reactive group, this compound can be fixed to the surface of the printing original plate and then crosslinked through irradiation with light, heat, or electronic beam to form a stronger coating.

The coupling agent mentioned above can be diluted, if necessary, with a water-alcohol or an acetic acid water-alcohol mixed solution to prepare a treatment solution. The concentration of the coupling agent in the treatment solution is preferably 0.05 to 10.0% by mass.

The treatment of the printing original plate surface with the coupling agent is performed by applying the treatment solution containing the coupling agent to the surface of the printing original plate before laser engraving or the printing original plate after laser engraving.

A method for applying the treatment solution of the coupling agent to the printing original plate is not particularly limited. For example, an immersion method, a spray method, a roll coating method, or a brushing method can be applied thereto. A coating treatment temperature or a coating treatment time is not particularly limited. The treatment temperature is preferably 5 to 60°C, and the treatment time is preferably 0.1 to 60 seconds. The treatment solution layer formed on the surface of the printing original plate is preferably dried under heating, and the heating temperature is preferably 50 to 150°C.

At a stage prior to the surface treatment of the printing original plate with the coupling agent, the surface of the printing original plate may be allowed to generate a hydroxy group such that the coupling agent can be fixed thereto at a high density. Specific examples of such a method include a method of irradiating the surface with light in a vacuum ultraviolet region having a wavelength of 200 nm or less, such as a xenon excimer lamp, and a method of exposing the surface to an atmosphere of high energy such as plasma.

The laminate of the present embodiment is suitable as an original plate for relief image formation for a printing plate. In addition, the laminate of the present embodiment can be used for various purposes including stamps or seals, design rolls for embossings, insulators for use in electronic components, resistance elements, materials for pattern formation of conductor pastes, materials for pattern formation of functional materials such as antireflective films of optical components, color filters, and (near) infrared absorption filters, oriented films in the production of display devices such as liquid crystal displays or organic electroluminescence displays, materials for coating or pattern formation of underlayers, luminescent layers, electronic transport layers, and sealant layers, materials for relief image formation for mold materials of ceramic products, materials for relief image formation for displays such as advertisement or display plates, and prototype molds or mother dies of various molded products.

### (Protection film)

The laminate of the present embodiment has a configuration in which a protection film is laminated on the printing original plate.

Examples of the protection film include, but are not limited to, polypropylene films, polyethylene films, polyester films such as polyethylene terephthalate and polyethylene naphthalate, and polyamide films.

Among them, dimensionally stable polyethylene terephthalate having a thickness in the range of 75 to 300 µm is preferred.

The protection film preferably has, on the surface, an indented pattern having a height of 2 µm or more including embossing from the viewpoint of peelability.

### (Physical property of printing original plate)

### <Storage modulus>

In the laminate of the present embodiment, the printing original plate preferably has a storage modulus G' of 5.00 × 10⁴ Pa or more and 1.00 × 10⁶ Pa or less at 140°C.

With the storage modulus G' of the printing original plate being 5.00 × 10⁴ Pa or more, an effect of stabilizing engraving quality at the time of laser engraving is obtained. With the storage modulus G' being 1.00 × 10⁶ Pa or less, an effect of improving engraving accuracy at the time of laser engraving is obtained.

The storage modulus G' at 140°C of the printing original plate is more preferably 8.00 × 10⁴ Pa to 9.00 × 10⁵ Pa, further preferably 2.00 × 10⁵ Pa to 7.00 × 10⁵ Pa.

The storage modulus G' of the printing original plate can be controlled within the numerical range described above by adjusting the addition ratio of the organic compound (b) contained in the photosensitive resin composition.

The storage modulus G' of the printing original plate can be measured with Discovery HR2 (manufactured by TA Instruments Japan Inc., trade name) and specifically, can be measured by a method described below. Also, the storage modulus G' can be measured by a method described in Examples mentioned later.

With the storage modulus G' at 140°C being 5.00 × 10⁴ Pa or more, an intramolecular motion can be easily activated, thereby improving the efficiency of processing with ultrashort pulsed laser. On the other hand, with the storage modulus G' being 1.00 × 10⁶ Pa or less, defects such as cracks on printing original plate surface due to the impact of generated plasma can be prevented and sufficient processing accuracy can be maintained.

### <Method for measuring storage modulus (G')>

The storage modulus (G') of the printing original plate is measured by the following procedures using a dynamic viscoelastic measurement apparatus Discovery HR2 (manufactured by TA Instruments Japan Inc., trade name).

The photosensitive resin composition layer is sandwiched on both sides between polyethylene terephthalate films of 135 µm in overall thickness, and laminated into a thickness of 2 mm. The laminate is subjected to ultraviolet irradiation (cumulative ultraviolet dose: 4000 mJ/cm²) from both sides. In this state, the polyethylene terephthalate films on both sides are removed, and the photosensitive resin composition layer is cut into a round shape having a size of 8 mm in diameter and 2 mm in thickness. The sample is loaded in the load controlled-type geometry of the dynamic viscoelastic measurement apparatus Discovery HR2, and measured under conditions involving an effective measurement thickness of 1.9 mm, an initial strain of 0.1%, a measurement frequency provided in the range of 0.01 Hz to 15.915 Hz in terms of a sine wave, and measurement temperatures from 20°C to 160°C at 10°C intervals. A master curve is prepared at a reference temperature of 20°C from the temperature-time superposition principle in accordance with the application of the apparatus, and the value of storage modulus G' at 140°C is read at 1000 Hz. In this way, the storage modulus at 140°C can be measured.

### <Melt flow rate (MFR)>

In the laminate of the present embodiment, the printing original plate preferably has a melt flow rate (MFR) of 0 (g/10 min) or more and 20 (g/10 min) or less.

With the MFR of the printing original plate being 0 (g/10 min) or more, plasma is uniformly generated in the printing original plate upon plasma generation of the printing original plate by laser irradiation so that an effect of improving processing efficiency in the depth direction at the time of processing is obtained. With the MFR being 20 (g/10 min) or less, durability against heat generated in forming an indented pattern with ultrashort pulsed laser beam can be sufficiently secured, thereby improving the surface thickness evenness of the printing original plate.

The MFR of the printing original plate is more preferably 0.1 to 10 (g/10 min), further preferably 1 to 10 (g/10 min).

The MFR of the printing original plate can be controlled within the numerical range described above by adjusting the blending ratio of a thermoplastic elastomer.

The MFR of the printing original plate can be measured by the approach of ASTM D1238 and specifically, can be measured by a method described in Examples mentioned later.

### <Method for measuring melt flow rate (MFR)>

The MFR of the printing original plate is measured under conditions involving a temperature of 150°C and a load of 2.16 kg in accordance with ASTM D1238.

The stability of a laser engraving shape can be evaluated from the evaluation of this melt flow rate. Specifically, when the value of MFR is larger, it can be confirmed that the engraving shape is more easily melted by heat generated at the time of laser engraving.

The "MFR" of the printing original plate in the laminate of the present embodiment refers to physical properties (melt flow rate) in a state after ultraviolet irradiation (cumulative ultraviolet dose: 4000 mJ/cm²) on both sides of the photosensitive resin composition layer constituting the laminate.

### <Laser beam transmittance>

In the laminate of the present embodiment, the printing original plate preferably has a laser beam transmittance of 10% or more and 99.9% or less at a wavelength of ultrashort pulsed laser beam for indented pattern formation. A higher laser beam transmittance permits deeper permeation of the laser beam so that the photosensitive resin can uniformly generate plasma, thereby improving processing efficiency. On the other hand, too high a laser beam transmittance reduces laser beam absorption efficiency and hinders a plasma generation phenomenon. Therefore, the numerical range described above is preferred.

Specifically, with the laser beam transmittance being 10% or more, an effect of improving abrasion processing efficiency is obtained. With the laser beam transmittance being 99.9% or less, an effect of improving abrasion processing quality is obtained.

The laser beam transmittance is more preferably 70 to 99.9%, further preferably more than 75% and 99.9% or less, still further preferably more than 95% and 99.9% or less.

The laser beam transmittance of the printing original plate at the wavelength of ultrashort pulsed laser beam for indented pattern formation can be controlled within the numerical range described above by blending an ultraviolet absorber, a colorant, or a pigment thereinto.

The laser beam transmittance can be measured with a spectrophotometer. Specifically, the laser beam transmittance can be measured by a method described in Examples mentioned later.

### <Method for measuring laser beam transmittance>

The laser beam transmittance (%) at the wavelength of laser beam is a value measured using an ultraviolet/visible/near-infrared spectrophotometer "V-750" (manufactured by JASCO Corp., trade name).

The measurement table used is FLH-467 (manufactured by JASCO Corp., trade name), and the software used is SpectraManager (manufactured by JASCO Corp., trade name). Measurement is performed under conditions involving a band width of 2 nm, a scanning rate of 400 nm/min, and a data capture interval of 2 nm.

The printing original plate is measured as a sample with a total thickness of 1 mm in a state where the protection film and the support have been peeled therefrom.

### [Method for producing printing plate]

The method for producing a printing plate according to the present embodiment comprises a laser engraving step of forming an indented pattern on a surface of the printing original plate in the laminate of the present embodiment mentioned above using ultrashort pulsed laser beam.

The "ultrashort pulsed laser beam" means pulsed laser beam of an electromagnetic wave whose width is on the order of several hundreds of picoseconds or less, and includes pulsed laser beam whose width is on the order of femtoseconds to attoseconds.

In the laser engraving step, the printing original plate surface is irradiated with ultrashort pulsed laser beam, and the resin of the portion irradiated with laser beam is removed to form the desired indented pattern.

In the method for producing a printing plate according to the present embodiment, a laser engraving apparatus that can form a fine pattern using laser having a low average output, as a laser beam source, as compared with continuous wave laser having an output of gigawatt class, is preferably used. This achieves cost reduction.

The ultrashort pulsed laser beam has a large maximum peak power per pulse, acts directly on the intermolecular covalent bond of the compound constituting the printing original plate, and can ionize, gasify together with a plasma phenomenon, and scatter only a specific atom. Hence, an effect of improving printing plate production efficiency is also obtained because of high processing efficiency and a fewer number of steps.

In the method for producing a printing plate according to the present embodiment, the printing original plate preferably has a storage modulus G' of 5.00 × 10⁴ Pa or more and 1.00 × 10⁶ Pa or less at 140°C.

With the storage modulus G' of the printing original plate being 5.00 × 10⁴ Pa or more, an effect of stabilizing engraving quality at the time of laser engraving is obtained. With the storage modulus G' being 1.00 × 10⁶ Pa or less, an effect of improving engraving accuracy at the time of laser engraving is obtained.

The storage modulus G' at 140°C of the printing original plate is more preferably 8.00 × 10⁴ Pa to 9.00 × 10⁵ Pa, further preferably 2.00 × 10⁵ Pa to 7.00 × 10⁵ Pa.

When the printing original plate is a photosensitive resin composition, the storage modulus G' of the printing original plate can be controlled within the numerical range described above by adjusting the addition ratio of the organic compound (b) contained in this photosensitive resin composition.

The storage modulus G' of the printing original plate can be measured with Discovery HR2 (manufactured by TA Instruments Japan Inc., trade name) and can be measured by a method described in Examples mentioned later.

With the storage modulus G' at 140°C being 5.00 × 10⁴ Pa or more, an intramolecular motion can be easily activated, thereby improving the efficiency of processing with ultrashort pulsed laser. On the other hand, with the storage modulus G' being 1.00 × 10⁶ Pa or less, defects such as cracks on printing original plate surface due to the impact of generated plasma can be prevented and sufficient processing accuracy can be maintained.

In the method for producing a printing plate according to the present embodiment, the depth of focus of the ultrashort pulsed laser beam in the engraving step is preferably 25 µm or more and 700 µm or less from the surface of the printing original plate. Specifically, at least a portion at a thickness of 25 µm or more and 700 µm or less from the surface of the printing original plate is preferably made of a cured resin having beam permeability in a near-infrared region.

A surface portion of the printing original plate is preferably made of a cured resin having laser beam permeability in an ultraviolet region, from the viewpoint of sufficiently securing mechanical strength. The surface portion means a portion except for a modifying layer mentioned above when the printing original plate has the modifying layer on the surface.

The laser beam transmittance of the printing original plate is preferably 10% or more and 99.9% or less, more preferably 70% or more and 99.9% or less, still more preferably 75% or more and 99.9% or less, further preferably more than 75% and 99.9% or less, still further preferably more than 95% and 99.9% or less, at a wavelength of the ultrashort pulsed laser beam for use in the laser engraving step.

The laser beam transmittance is a value with respect to the wavelength of the ultrashort pulsed laser beam for use in the engraving step for the printing original plate constituting the laminate of the present embodiment.

Specifically, the laser beam transmittance of the printing original plate can be measured by use of a laser beam permeation method in an ultraviolet/visible/near-infrared spectrophotometer using a cured resin designed so as to have a thickness that simulates the printing original plate.

With the laser beam transmittance of the printing original plate at the wavelength of the ultrashort pulsed laser beamfor use in the engraving step being in the range of 10% or more and 99.9% or less, laser engraving in the depth direction is sufficiently performed. This is preferred from the viewpoint that laser having a low average output can be used as a laser beam source.

In the method for producing a printing plate according to the present embodiment, ultrashort pulsed laser is used. The ultrashort pulsed laser for use in the production method is pulsed ultraviolet and near-infrared laser whose wavelength region has an oscillation wavelength from a near-ultraviolet region through a visible region to a near-infrared region.

The near-infrared region is defined as a region having a wavelength of 700 nm or more and 3 µm or less.

The visible region is defined as a region having a wavelength of 320 nm or more and 700 nm or less.

The ultraviolet region is defined as a region having a wavelength of 100 nm or more and 400 nm or less.

In the method for producing a printing plate according to the present embodiment, the oscillation wavelength of the ultrashort pulsed laser beam for use in the laser engraving step is preferably 300 nm or more and 1.5 µm or less, more preferably 300 nm or more and 700 nm or less, further preferably 400 nm or more and 700 nm or less, still further preferably 450 nm or more and less than 700 nm.

With the oscillation wavelength of the laser beam in the engraving step being 300 nm or more, an effect of improving abrasion processing efficiency is obtained. With the oscillation wavelength being 1.5 µm or less, an effect of improving abrasion processing quality is obtained.

Examples of the type of the near-infrared laser include, but are not particularly limited to, a fundamental wave of semiconductor laser-excited solid laser or lamp-excited solid laser, second-order and third-order waves obtained by wavelength conversion thereof, semiconductor laser, and fiber laser.

Particularly, semiconductor laser-excited solid laser or fiber laser is preferred from the viewpoint of oscillation stability and easy handling.

Examples of the solid laser include, but are not limited to, alexandrite laser, titanium sapphire laser, Cr:LiSAF laser, F-Center laser, Co:MgF₂ laser, Nd:YAG laser, Nd:YLF laser, Nd:YVO₄ laser, Er:glass laser, Ho:YAG laser, Ho:YSGG laser, Tm:YAG laser, and Er:YAG laser.

For the semiconductor laser-excited solid laser, there exist two types of excitation schemes, a side pump scheme and an end pump scheme. An end pump scheme is more preferred for obtaining an excellent beam shape.

The laser for use in the method for producing a printing plate according to the present embodiment is preferably pulsed near-infrared laser, and its repetition frequency is preferably 20 kHz or more and 500 MHz or less, more preferably in the range of 100 kHz or more and 200 MHz or less, further preferably 500 kHz or more and 100 MHz or less.

With the repetition frequency being in the range of 20 kHz or more and 500 MHz or less, engraving is attained by high-speed scanning of a laser beam. This is preferred from the viewpoint that the time required for the engraving step can be shortened.

The pulse width of the ultrashort pulsed laser for use in the method for producing a printing plate according to the present embodiment is preferably 1 femtosecond or more and 200 nanoseconds or less, more preferably in the range of 10 femtoseconds or more and 100 nanoseconds or less, further preferably 10 femtoseconds or more and 30 nanoseconds or less.

With the pulse width being 1 femtosecond or more and 200 nanoseconds or less, a large highest peak output is obtained even if the average output of the laser is small; a large energy can be charged within a very short time; and the engraving of the printing original plate can be easily carried out. Furthermore, an effect of suppressing the influence of heat is obtained, and the resulting pattern is excellent in shape.

A mode locking technique is preferably used as a method for obtaining a femtosecond or picosecond pulse. Laser having a Q switch is preferably used as a method for obtaining a short pulse having a large highest peak output.

In the method for producing a printing plate according to the present embodiment, the rate of overlap between successive pulses of the ultrashort pulsed laser beam for use in the laser engraving step is preferably 50% or more and 99% or less.

The rate of overlap of the laser beam can be calculated from the ratio of overlapping areas or the ratio of overlapping diameters between successive pulses in the laser beam used in the irradiation of the printing original plate.

With the rate of overlap of the laser beam in the engraving step being 50% or more, a sufficient laser irradiation intensity can be secured. With the rate of overlap being 99% or less, a practically sufficient engraving rate can be secured.

The rate of overlap of the laser beam in the engraving step is more preferably 70.0 to 99.0%, further preferably 85.0 to 99.0%.

In the method for producing a printing plate according to the present embodiment, the average output of the ultrashort pulsed laser beam for use in the engraving step is preferably 0.01 W or more and less than 1000 W, more preferably 0.05 W or more and 800 W or less, further preferably 0.1 W or more and 100 W or less, still further preferably 0.8 W or more and 500 W or less.

With the average output of the ultrashort pulsed laser beam in the engraving step being 0.01 W or more and less than 1000 W, the printing original plate can be easily engraved and the resulting indented pattern has a clear edge shape. Also, an indented pattern having a width almost equal to a laser beam diameter can be obtained without being excessively melted or removed, because of less influence of heat.

The power per pulse of the ultrashort pulsed laser beam for use in the engraving step of the method for producing a printing plate according to the present embodiment is preferably 20 kW or more and 10 GW or less, more preferably in the range of 100 kMW or more and 5 GW or less, further preferably 1 MW or more and 1 GW or less. With the power per pulse being 20 kW or more, the printing original plate can be easily engraved. This is preferred from the viewpoint that the resulting pattern has a clear edge shape.

The power per pulse of 10 GW or less is preferred from the viewpoint that a depressed pattern having a width almost equal to a laser beam diameter can be obtained without being excessively melted or removed, because of less influence of heat.

The power (unit: W) per pulse is defined as a value obtained by dividing an average output (unit: W) by a repetition frequency (unit: pulse/sec), and further dividing the resulting value by a pulse width (width of one pulse, unit: sec). A larger value of the power per pulse defined as above means a larger highest peak output.

In the method for producing a printing plate according to the present embodiment, the energy per pulse of the ultrashort pulsed laser beam for use in the laser engraving step is preferably 1 µJ or more and 100 kJ or less.

The unit J of the energy per pulse of the laser beam is a value obtained by dividing an average output (unit: W) by a repetition frequency (unit: pulse/sec).

With the energy per pulse of the laser beam being 1 µJ or more, the printing original plate can be easily engraved. This is preferred from the viewpoint that the resulting pattern has a clear edge shape.

The energy of 100 kJ or less per pulse is preferred from the viewpoint that a depressed pattern having a width almost equal to a laser beam diameter can be obtained without being excessively melted or removed, because of less influence of heat.

The energy per pulse of the laser beam is more preferably 1 µJ or more and 1 kJ or less, further preferably 1 µJ or more and 100 µJ or less.

In the method for producing a printing plate according to the present embodiment, it is preferred to condense a laser beam outputted from the ultrashort pulsed laser into a diameter of 1 µm or more and less than 20 µm and irradiate the printing original plate surface with the condensed beam, in order to accurately form a fine pattern, for example, a fine indented pattern having a width of 1 µm or more and less than 200 µm and a depth of 1 µm or more and less than 1000 µm.

The depth of the printing original plate to be engraved with one pulse of the ultrashort pulsed laser beam for use in the engraving step is preferably 1 µm or more and 100 µm or less. The depth in the range of 1 µm or more and 30 µm or less of the printing original plate to be engraved with one pulse is preferred from the viewpoint that an indented pattern having a dimension equivalent to the diameter of the laser beam can be formed, and from the viewpoint that use of pulsed near-infrared laser having a high repetition frequency permits deep engraving with a plurality of pulses at one site.

For condensing the laser beam, a diffraction grating-type, homogenizer-type, or field mapping-type lens as well as a beam shaper with a fiber core or a lens comprising a collimating lens or a telecentric lens is preferably used.

In the laser engraving step of the method for producing a printing plate according to the present embodiment, particularly, in the case of scanning a laser beam at a relatively large width or in a relatively large region in the monoaxial or biaxial direction using a galvanometer mirror, a fθ lens having a large dimension is preferably used.

In the method for producing a printing plate according to the present embodiment, the lens for use in the laser engraving step preferably has a numerical aperture (NA) of 0.01 or more and 0.100 or less.

With the numerical aperture of the lens being 0.01 or more, the printing original plate can be easily laser-engraved. Also, the spot size of the laser beam can be decreased. This is preferred from the viewpoint of obtaining a fine shape.

With the numerical aperture of the lens being 0.100 or less, the depth of focus of the laser for the printing original plate can be easily increased and the resulting pattern has a clear edge shape, which is preferred.

The numerical aperture of the lens is more preferably 0.02 or more and 0.900 or less, further preferably 0.03 or more and 0.800 or less.

When the material to be irradiated with the laser beam is a cured resin, an indented pattern having a width substantially equal to a beam diameter for irradiation can be formed by using laser having a low average output.

For achieving abrasion processing with the pulsed laser beam, the laser beam before condensing preferably oscillates in a multimode, i.e., a TEM00 mode. Its M2 value, an index that indicates the quality of laser in a lateral mode, is preferably 1 or more and 2 or less, more preferably in the range of 1 or more and 1.8 or less, still more preferably in the range of 1 or more and 1.5 or less.

In the laser engraving step of the method for producing a printing plate according to the present embodiment, a relief image is generally prepared on the printing original plate by operating a laser apparatus using a computer with an image to be formed as a digital data.

The method for producing a printing plate according to the present embodiment is preferably in a form in which a fine pattern is formed using near-ultraviolet laser beam to near-infrared laser beam as the ultrashort pulsed laser beam. When a coarser pattern, for example, a pattern having a width of more than 20 µm, is allowed to coexist therewith in one printing plate, an engraving step of using infrared laser may be further carried out as a laser engraving step. In this case, the infrared laser may be continuous wave laser or pulsed laser, and it is preferred to laser-engrave the printing original plate surface at a beam diameter of 15 µm or more and less than 100 µm. Engraving may be performed using infrared laser having an oscillation wavelength of 5 µm or more and 20 µm or less such that the engraving treatment is performed in a short time. Specific examples of the particularly preferred infrared laser can include carbon dioxide laser. The carbon dioxide laser may be in a continuous wave or pulsed oscillation mode. A laser beam outputted from the infrared laser may be condensed into a diameter of 15 µm or more and less than 100 µm to form a coarse indented pattern having a large width of more than 15 µm and a depth of 100 µm or more.

In the method for producing a printing plate according to the present embodiment, the number of beams of the pulsed laser beam for use in the laser engraving step is preferably at least one.

Use of a plurality of laser beams can drastically improve an engraving speed.

Engraving with the ultrashort pulsed laser beam and engraving with the infrared laser may be carried out at the same time or may be carried out separately. These operations are preferably carried out at the same time from the viewpoint of the shortening of the time required for engraving, except in the case where laser beam scanning schemes are different in a laser engraving apparatus.

This is, for example, the case where the pulsed near-infrared laser is scanned using a galvanometer mirror, whereas the infrared laser does not employ a galvanometer mirror for engraving.

In the laser engraving step of the method for producing a printing plate according to the present embodiment, it is preferred that in a state where a sheet-like printing original plate is wound and fixed on cylinder surface or where a cylindrical printing original plate is attached to a cylinder, the printing original plate should be irradiated with the laser beam while the cylinder is rotated on a stationary major axis in the circumferential direction, from the viewpoint of a laser engraving rate. This method enables laser engraving while the cylinder is rotated at a high speed.

A method for laser beam irradiation is preferably a method of scanning a laser beam in the major axis direction of the cylinder while rotating the cylinder, or of scanning a laser beam in the major axis direction of the cylinder using a galvanometer mirror, from the viewpoint of securing positional accuracy in laser engraving.

The engraving apparatus for use in laser engraving is preferably an apparatus that is equipped with a cylinder and is of type performing engraving while rotating the cylinder. This method is particularly preferred for producing a cylindrical printing plate.

In the method for producing a printing plate according to the present embodiment, the laser as the ultrashort pulsed laser beam for use in the laser engraving step has a high oscillation frequency. Therefore, a scanning scheme using a galvanometer mirror is preferably used in a method for scanning a laser beam.

In the case of scanning a laser beam in the major axis direction of the cylinder using of a galvanometer mirror, this approach comprises the step of laser-engraving a pattern of one cycle by one revolution of the cylinder according to an image data partitioned in the major axis direction of the cylinder, and then transferring the galvanometer mirror in the major axis direction of the cylinder, or transferring the cylinder in the major axis direction. A pattern corresponding to all image data can be laser-engraved by repetitively carrying out a series of steps described above.

The laser engraving apparatus for use in the laser engraving step of the method for producing a printing plate according to the present embodiment is preferably an apparatus that has pulsed near-infrared laser, a galvanometer mirror for scanning a laser beam in the major axis direction of a cylinder, a condensing lens for condensing the laser beam, and an optical shutter or a mechanical shutter, and has a mechanism to retain the major axis of the cylinder, a mechanism to rotate the retained cylinder in the circumferential direction, and further a mechanism to transfer the galvanometer mirror in the major axis direction of the cylinder or a mechanism to transfer the cylinder in its major axis direction.

The laser engraving apparatus is more preferably an apparatus that has continuous wave infrared laser and an optical shutter, or pulsed infrared laser and an optical shutter or a mechanical shutter, and has a condensing lens for condensing a laser beam, and a mechanism to transfer the laser beam in the major axis direction of the cylinder or a mechanism to transfer the cylinder in its major axis direction.

The galvanometer mirror is an optical component for scanning a laser beam in the monoaxial direction or the biaxial direction under the control of a computer, and is also called galvanometer scanner. Depending on the driving scheme of the mirror part, there exist a moving coil type and a moving magnet type, which can be used differently according to the oscillation frequency, scanning accuracy, and scanning area of the laser used. An acousto-optical modulator (AO modulator) is preferably used as the optical shutter.

The laser engraving step of the method for producing a printing plate according to the present embodiment is carried out under an oxygen-containing gas, generally in the presence of air or under stream of air, and can also be carried out under carbon dioxide or nitrogen gas.

When a gas generated at the time of laser engraving or a very small powdery residue flies, the spraying of air or an inert gas to an engraving part is effective for removal. After the completion of engraving, a powdery or liquid substance slightly generated on relief surface may be removed by use of a method known in the art, for example, a method of washing off the substance with water or the like containing a solvent or a surfactant, a method of exposing the substance to an aqueous detergent by high-pressure spray or the like, or a method of exposing the substance to high-pressure steam.

In the laser engraving step of the method for producing a printing plate according to the present embodiment, the step of removing a powdery or viscous liquid residue remaining on the surface of the printing original plate may be carried out after formation of a fine indented pattern by engraving through laser beam irradiation, followed by post-exposure to irradiate the printing original plate surface with light having a wavelength of 200 nm to 450 nm. Tack removal from the surface of the printing original plate can be effectively performed by carrying out this post-exposure. The post-exposure may be performed in any environment, i.e., in the atmosphere, in an inert gas atmosphere, or in water. Particularly, when the material of the printing original plate comprises a hydrogen-withdrawing photopolymerization initiator, tack removal by the post-exposure is highly effective. Before the post-exposure step, the printing original plate surface may be treated with a treatment solution containing a hydrogen-withdrawing photopolymerization initiator, and then, the post-exposure step can be carried out. Alternatively, the post-exposure step may be carried out in a state where the printing original plate is immersed in a treatment solution containing a hydrogen-withdrawing photopolymerization initiator.

### Examples

Hereinafter, the present invention will be described in detail with reference to specific Examples and Comparative Examples. However, the present invention is not limited by Examples and Comparative Examples given below by any means.

Physical properties used in Examples and Comparative Examples given below will be described below.

### [Melt flow rate (MFR)]

The melt flow rate (g/10 min) of the printing original plate was measured under conditions involving a temperature of 150°C and a load of 2.16 kg in accordance with ASTM D1238.

The stability of a laser engraving shape was evaluated from the evaluation of this melt flow rate.

When the value of MFR is larger, it was confirmed that the engraving shape was more easily melted by heat generated at the time of laser engraving.

In Tables 1 and 2, "MFR" refers to physical properties (melt flow rate) in a state after ultraviolet irradiation (cumulative ultraviolet dose: 4000 mJ/cm²) on both sides of the photosensitive resin composition.

### [Laesr beam transmittance at laser wavelength]

The laser beam transmittance (%) of the printing original plate at a laser wavelength was measured using an ultraviolet/visible/near-infrared spectrophotometer "V-750" (manufactured by JASCO Corp., trade name).

The measurement wavelength was set to 1064 nm, 515 nm, and 343 nm.

The measurement table used was FLH-467 (manufactured by JASCO Corp., trade name), and the software used was SpectraManager (manufactured by JASCO Corp., trade name). Measurement was performed under conditions involving a band width of 2 nm, a scanning rate of 400 nm/min, and a data capture interval of 2 nm.

The sample for measurement used was the printing original plate in a state where the protection film and the support were peeled therefrom. The total thickness of the sample was 1 mm.

### [Storage modulus (G')]

The storage modulus (G') of the printing original plate was measured by the following procedures using a dynamic viscoelastic measurement apparatus Discovery HR2 (manufactured by TA Instruments Japan Inc., trade name).

The photosensitive resin composition layer was sandwiched on both sides between polyethylene terephthalate films of 135 µm in overall thickness, and laminated into a thickness of 2 mm. In this way, a photosensitive resin composition construct of PET film/ photosensitive resin composition layer/PET film was obtained.

The photosensitive resin composition construct was subjected to ultraviolet irradiation (cumulative ultraviolet dose: 4000 mJ/cm²) from both sides. In this state, the polyethylene terephthalate films on both sides were removed, and the photosensitive resin composition layer was cut into a round shape having a size of 8 mm in diameter and 2 mm in thickness to prepare a sample for measurement.

The sample for measurement was loaded in the load controlled-type geometry of the dynamic viscoelastic measurement apparatus Discovery HR2. Measurement was performed under conditions involving an effective measurement thickness of 1.9 mm, an initial strain of 0.1%, a measurement frequency provided in the range of 0.01 Hz to 15.915 Hz in terms of a sine wave, and measurement temperatures from 20°C to 160°C at 10°C intervals. A master curve was prepared at a reference temperature of 20°C from the temperature-time superposition principle in accordance with the application of the dynamic viscoelastic measurement apparatus, and the value of storage modulus G' at 140°C was read at 1000 Hz.

### [Production of laminate before exposure]

### (Production Example 1)

### < Photosensitive resin composition>

Photosensitive resin composition 1 for use in printing original plate 1 was prepared as follows.

55 parts by mass of a thermoplastic elastomer of a styrenebutadiene block copolymer (manufactured by Kraton Polymers Japan Ltd., trade name "KX-405", Mn: 100000, styrene content: 24% by mass), 24 parts by mass of a plasticizer liquid paraffin (manufactured by MORESCO Corp., trade name "SMOIL P350P", Mn: 483), 13 parts by mass of a plasticizer liquid rubber elastomer of a liquid polybutadiene polymer (manufactured by Kuraray Co., Ltd., trade name "LBR-352", Mn: 6200), 6 parts by mass of a photopolymerizable monomer 1,9-nonane methylene diacrylate (manufactured by Kyoeisha Chemical Co., Ltd., trade name NMDA), 2 parts by mass of a photopolymerization initiator 2,2-dimethoxy-1,2-diphenylethan-1-one (manufactured by FUJIFILM Wako Pure Chemical Corp.), and 1 part by mass of a thermal polymerization inhibitor 2,6-di-t-butyl-p-cresol were uniformly kneaded using a kneader heated to 180°C to obtain photosensitive resin composition 1 serving as a starting material of the printing original plate.

### <Support>

A polyethylene terephthalate film support of 135 µm in overall thickness having a urethane adhesive layer was prepared as follows.

First, a polyethylene terephthalate film support having a thickness of 125 µm was prepared as described below.

93 g of ethylene glycol, 374 g of neopentyl glycol, and 382 g of phthalic acid were subjected to condensation reaction at a reaction temperature of 180°C under reduced pressure of 1330 Pa for 6 hours in an air atmosphere. Then, 125 g of 4,4-diphenylene diisocyanate was added thereto, and the mixture was further reacted at 80°C for 5 hours to obtain a resin.

This resin was prepared into a 10% aqueous solution, which was then applied onto the polyethylene terephthalate film having a thickness of 125 µm. The film thus coated was biaxially drawn to obtain a polyethylene terephthalate film having an undercoat layer. The thickness of the undercoat layer was 0.05 µm.

Next, a urethane adhesive layer prepared as mentioned later was applied to the polyethylene terephthalate film support having the undercoat layer.

624 g of neopentyl glycol, 93 g of ethylene glycol, 485 g of sebacic acid, and 382 g of isophthalic acid were subjected to condensation reaction at a reaction temperature of 180°C under reduced pressure of 1330 Pa for 6 hours in an air atmosphere. Then, 87 g of trimethylene diisocyanate was added thereto, and the mixture was further reacted for 5 hours to obtain polyol.

To 15 parts by mass of this polyol, 1 part by mass of xylene diisocyanate was added, and the mixture was dissolved in ethyl acetate to prepare a homogeneous solution. This solution was a urethane adhesive solution. This solution was applied to the polyethylene terephthalate film using a knife coater and dried at 80°C for 3 minutes to form an adhesive layer having a thickness of 10 µm. In this way, the polyethylene terephthalate film support of 135 µm in thickness including the thickness of the adhesive layer was obtained.

### <Laminate before exposure>

Next, the photosensitive resin composition 1 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 1 before exposure.

### (Production Example 2)

Photosensitive resin composition 2 for use in printing original plate 2 was prepared as follows.

81 parts by mass of a thermoplastic elastomer "D-1161" of a styrene-isoprene block copolymer (manufactured by Kraton Polymers Japan Ltd., trade name, Mn: 180000, styrene content: 15% by mass), 10 parts by mass of a plasticizer liquid polybutadiene "B2000" (manufactured by Nippon Soda Co., Ltd., trade name), 5 parts by mass of a photopolymerizable monomer 1,9-nonane methylene diacrylate, 3 parts by mass of a photopolymerization initiator 2,2-dimethoxy-2-phenylacetophenone, and 1 part by mass of a thermal polymerization inhibitor 2,6-di-t-butyl-p-cresol were uniformly kneaded using a kneader heated to 160°C to obtain photosensitive resin composition 2 serving as a starting material of the printing original plate.

Next, in the same manner as in the section (Production Example 1), the photosensitive resin composition 2 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 2 before exposure.

### (Production Example 3)

Photosensitive resin composition 3 for use in printing original plate 3 was prepared as follows.

67 parts by mass of a thermoplastic elastomer "D-1161" of a styrene-isoprene block copolymer (manufactured by Kraton Polymers Japan Ltd., trade name, Mn: 180000, styrene content: 15% by mass), 15 parts by mass of a plasticizer liquid polybutadiene "B2000" (manufactured by Nippon Soda Co., Ltd., trade name), 4 parts by mass of a photopolymerizable monomer 1,9-nonane methylene diacrylate, 3 parts by mass of a photopolymerization initiator 2,2-dimethoxy-2-phenylacetophenone, and 1 part by mass of a thermal polymerization inhibitor 2,6-di-t-butyl-p-cresol were uniformly kneaded using a kneader heated to 160°C to obtain photosensitive resin composition 2 serving as a starting material of the printing original plate.

Next, in the same manner as in the section (Production Example 1), the photosensitive resin composition 3 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 3 before exposure.

### (Production Example 4)

Photosensitive resin composition 4 for use in printing original plate 4 was prepared as follows.

85 parts by mass of a thermoplastic elastomer of a styrenebutadiene block copolymer (manufactured by Kraton Polymers Japan Ltd., trade name "KX-405", Mn: 100000, styrene content: 24% by mass), 10 parts by mass of a plasticizer liquid rubber elastomer of a liquid polybutadiene polymer (manufactured by Kuraray Co., Ltd., trade name "LBR-352", Mn: 6200), 3 by mass of a photopolymerizable monomer 1,9-nonane methylene diacrylate (manufactured by Kyoeisha Chemical Co., Ltd., trade name NMDA), and 1 part by mass of a thermal polymerization inhibitor 2,6-di-t-butyl-p-cresol were uniformly kneaded using a kneader heated to 180°C to obtain photosensitive resin composition 4 serving as a starting material of the printing original plate.

Next, in the same manner as in the section (Production Example 1), the photosensitive resin composition 4 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 4 before exposure.

### (Production Example 5)

Photosensitive resin composition 5 for use in printing original plate 5 was prepared as follows.

77 parts by mass of a thermoplastic elastomer "D-1161" of a styrene-isoprene block copolymer (manufactured by Kraton Polymers Japan Ltd., trade name, Mn: 180000, styrene content: 15% by mass), 5 parts by mass of a plasticizer liquid polybutadiene "B2000" (manufactured by Nippon Soda Co., Ltd., trade name), 3 parts by mass of a photopolymerizable monomer 1,9-nonane methylene diacrylate, 10 parts by mass of a photopolymerization initiator 2,2-dimethoxy-2-phenylacetophenone, and 5 part by mass of a thermal polymerization inhibitor 2,6-di-t-butyl-p-cresol were uniformly kneaded using a kneader heated to 160°C to obtain photosensitive resin composition 5 serving as a starting material of the printing original plate.

Next, in the same manner as in the section (Production Example 1), the photosensitive resin composition 5 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 5 before exposure.

### (Production Example 6)

Photosensitive resin composition 6 for use in printing original plate 6 was prepared as follows.

60 parts by mass of a thermoplastic elastomer of a styrenebutadiene block copolymer (manufactured by Kraton Polymers Japan Ltd., trade name "KX-405", Mn: 100000, styrene content: 24% by mass), 24 parts by mass of a plasticizer liquid paraffin (manufactured by MORESCO Corp., trade name "SMOIL P350P", Mn: 483), 5 parts by mass of a plasticizer liquid rubber elastomer of a liquid polybutadiene polymer (manufactured by Kuraray Co., Ltd., trade name "LBR-352", Mn: 6200), 1 by mass of a photopolymerizable monomer 1,9-nonane methylene diacrylate (manufactured by Kyoeisha Chemical Co., Ltd., trade name NMDA), 5 by mass of a photopolymerization initiator 2,2-dimethoxy-1,2-diphenylethan-1-one, and 1 part by mass of a thermal polymerization inhibitor 2,6-di-t-butyl-p-cresol were uniformly kneaded using a kneader heated to 180°C to obtain photosensitive resin composition 6 serving as a starting material of the printing original plate.

Next, in the same manner as in the section (Production Example 1), the photosensitive resin composition 6 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 6 before exposure.

### (Production Example 7)

Photosensitive resin composition 7 for use in printing original plate 7 was prepared as follows.

55 parts by mass of a thermoplastic elastomer of a styrenebutadiene block copolymer (manufactured by Kraton Polymers Japan Ltd., trade name "KX-405", Mn: 100000, styrene content: 24% by mass), 24 parts by mass of a plasticizer liquid paraffin (manufactured by MORESCO Corp., trade name "SMOIL P350P", Mn: 483), 13 parts by mass of a mixture of a liquid rubber elastomer (manufactured by Kuraray Co., Ltd., trade name "LBR-352", Mn: 6200) filled with carbon black (90.5% by mass of the rubber and 9.5% by mass of the carbon black), 5 by mass of a photopolymerizable monomer 1,9-nonane methylene diacrylate (manufactured by Kyoeisha Chemical Co., Ltd., trade name NMDA), 2 by mass of a photopolymerization initiator 2,2-dimethoxy-1,2-diphenylethan-1-one (manufactured by FUJIFILM Wako Pure Chemical Corp.), 1 part by mass of a thermal polymerization inhibitor 2,6-di-t-butyl-p-cresol, and 1 part by mass of a colorant (VALIFAST Yellow 3150 (manufactured by Orient Chemical Industries Co., Ltd., trade name)) were uniformly kneaded using a kneader heated to 180°C to obtain photosensitive resin composition 7 serving as a starting material of the printing original plate.

Next, in the same manner as in the section (Production Example 1), the photosensitive resin composition 7 was sandwiched between the polyethylene terephthalate film support of 135 µm in thickness having the adhesive layer (support film) and a polyethylene terephthalate film (surface protection film) and molded into a total thickness of 3 mm using a hot press of 120°C to obtain laminate 7 before exposure.

### [Example 1-1]

### (Laminate having printing original plate)

A laminate having a printing original plate was prepared.

First, a laminate having printing original plate 1 was prepared from the "laminate 1 before exposure" obtained in the section (Production Example 1).

The photosensitive resin composition layer 1 constituting the "laminate 1 before exposure" was regarded as becoming the printing original plate 1 by peeling the surface protection film after exposure.

The exposure apparatus used was a plate making machine AFP-1321EHQ (manufactured by Asahi Kasei Corp., trade name) having an 80 W ultraviolet fluorescent lamp having a central wavelength region at a wavelength of 370 nm.

This plate making machine was confirmed to have light irradiation intensity of 12.0 mW/cm² immediately therebelow measured using a UV-35 filter (manufactured by ORC Manufacturing Co., Ltd., trade name) of an ultraviolet measurement apparatus UV-MO2 (manufactured by ORC Manufacturing Co., Ltd., trade name).

Next, the "laminate 1 before exposure" obtained in the section (Production Example 1) was exposed to light at a dose of 500 mJ/cm² from the support side and at a dose of 4000 mJ/cm² from the surface protection film side using a light source of the plate making machine in the atmosphere to obtain a sheet-like laminate of 20 cm square having a configuration of support/printing original plate 1/surface protection film.

The doses described above were calculated using the UV-35 filter (manufactured by ORC Manufacturing Co., Ltd., trade name) of UV-MO2.

In this example, the MFR after exposure of the photosensitive resin composition 1 having the support and the surface protection film on the upper and lower sides was 1.0 g/10 min, which was less than half the MFR before exposure. It was therefore confirmed that the photosensitive resin composition was cured. The storage modulus (G') was 1.00 × 10⁵ Pa. The laser beam transmittance at the laser wavelength of 1064 nm was 95%, the laser beam transmittance at the laser wavelength of 515 nm was 90%, and the laser beam transmittance at the laser wavelength of 343 nm was 23%.

The physical properties of a printing plate were described in the tables below.

In the tables, "Entire surface exposure" means that the laminate was irradiated with chemoradiation at least at a dose of 1 mJ/cm² or more from the surface protection film side or the support film side.

In the tables, "Curing" means that the MFR of the printing original plate was changed.

These items are common in the following Examples and Comparative Examples.

### [Example 1-2]

### (Printing plate)

Next, the printing original plate 1 in a state where the surface protection film was peeled from the "laminate having the printing original plate 1" prepared in the section [Example 1-1] was laser-engraved using ultrashort pulsed laser beam given below to obtain a printing plate.

The laser engraving of a fine pattern was carried out by condensing YAG laser "IceFyre 1064-50" (manufactured by Spectra-Physics, Inc., trademark) with a fundamental wave of 1064 nm as end-pump semiconductor laser-excited Q-switched solid laser into a beam diameter of 28 µm using a lens.

The laser had a repetition frequency of 10 MHz, a pulse width of 0.1 picoseconds, an average output of 100 W, a rate of overlap of 95%, a lens NA of 0.037, a depth of focus of 0.25 mm, and an energy of 20 µJ per pulse.

The sample (sheet-like printing original plate) to be engraved was fixed to an XY stage with the laser beam fixed. A checkered indented pattern consisting of a plurality of indented patterns was formed by moving the XY stage. The M2 value, which indicates beam quality, was less than 1.8.

Output light passed through an 8× beam expander, and the condensing lens used had an f value of 100 mm. The printing original plate was fixed onto an X-Y-Z stage such that the upper support film was in contact with the lower stage. Positional control was performed so as to focus the laser to the inside of the printing original plate.

Linear indented patterns were formed for the engraving of a checkered pattern as a laser-engraved pattern. The formation region of each linear indented pattern was 3 mm × 100 mm.

In the region, an indented pattern was formed at a pitch of 145 µm in a straight line shape having a width of 145 µm in the longitudinal direction and a length of 100 mm in the lateral direction. Subsequently, an indented pattern was displaced by 145 µm each in the longitudinal and lateral directions and formed at a pitch of 145 µm in a straight line shape having a width of 145 µm and a length of 100 mm. In this way, pattern 1 having 20 each of longitudinal and lateral lines was formed.

Next, a checkered pattern was engraved in a region parallelly displaced by 100 mm from the pattern 1. An indented pattern was formed at a pitch of 65 µm in a straight line shape having a width of 65 µm in the longitudinal direction and a length of 100 mm in the lateral direction. Subsequently, an indented pattern was displaced by 65 µm each in the longitudinal and lateral directions and formed at a pitch of 65 µm in a straight line shape having a width of 65 µm and a length of 100 mm. In this way, pattern 2 having 46 each of longitudinal and lateral lines was formed.

The XY stage to be driven with a stepping motor was moved at a speed of 1250 mm/sec.

The obtained linear indented pattern 1 had a depth of 480 µm and had a clear pattern edge.

The linear indented pattern 2 had a depth of 160 µm and had a favorable pattern edge, albeit partially dissolved thermally.

### [Example 2-2]

### (Printing plate)

The printing original plate 1 obtained by peeling the surface protection film from the "laminate having the printing original plate 1" prepared in the section [Example 1-1] was laser-engraved using ultrashort pulsed laser beam given below to obtain a printing plate.

Laser engraving was carried out on the printing original plate 1 of the section [Example 1-1] under the laser engraving conditions of the section [Example 1-2] changed so as to involve a laser repetition frequency of 1 MHz, a pulse width of 1 picosecond, an average output of 20 W, a rate of overlap of 90%, and an energy of 20 µJ per pulse.

The obtained linear indented pattern 1 had a depth of 240 µm and had a clear pattern edge. The linear indented pattern 2 had a depth of 80 µm and had a clear pattern edge.

### [Example 3-2]

### (Printing plate)

The printing original plate 1 obtained by peeling the surface protection film from the "laminate having the printing original plate 1" prepared in the section [Example 1-1] was laser-engraved using ultrashort pulsed laser beam given below to obtain a printing plate.

Laser engraving was carried out on the printing original plate 1 under the laser engraving conditions of the section [Example 1-2] changed so as to involve a laser repetition frequency of 2.5 MHz, a pulse width of 1 picosecond, an average output of 4.8 W, a rate of overlap of 98%, and an energy of 4.8 µJ per pulse.

The obtained linear indented pattern 1 had a depth of 125 µm and had a clear pattern edge. The linear indented pattern 2 had a depth of 42 µm and had a clear pattern edge.

### [Example 4-2]

### (Printing plate)

The printing original plate 1 obtained by peeling the surface protection film from the "laminate having the printing original plate 1" prepared in the section [Example 1-1] was laser-engraved using ultrashort pulsed laser beam given below to obtain a printing plate.

The laser engraving of a fine pattern on the printing original plate 1 was carried out under the laser engraving conditions of the section [Example 1-2] by subjecting YAG laser "IceFyre 1064-50" (manufactured by Spectra-Physics, Inc., trademark) with a fundamental wave of 1064 nm as end-pump semiconductor laser-excited Q-switched solid laser to wavelength conversion to a second-order wave of 515 nm using a harmonic generator/pulse selector "SHG" (manufactured by Spectra-Physics, Inc., trademark), and condensing the laser into a beam diameter of 8 µm using a lens. The laser under the changed conditions had a repetition frequency of 1 MHz, a pulse width of 1 picosecond, an average output of 5 W, a rate of overlap of 96.9%, a lens NA of 0.070, a depth of focus of 0.100 mm, and an energy of 5 µJ per pulse.

The sample (sheet-like printing original plate) to be engraved was fixed. A checkered pattern consisting of a plurality of indented patterns was formed by moving the laser beam with a galvanometer mirror.

The M2 value, which indicates beam quality, was less than 1.8. For output light, the condensing lens used had an f value of 100 mm. Positional control was performed so as to focus the laser to the inside of the printing original plate.

As for laser-processed patterns, the indented pattern 1 had a depth of 115 µm and had a clear pattern edge. The linear indented pattern 2 had a depth of 40 µm and had a favorable pattern edge, albeit partially dissolved thermally. The pattern edge was clear.

### [Example 5-1]

### (Laminate having printing original plate)

First, a laminate having printing original plate 2 was prepared from the "laminate 2 before exposure" obtained in the section (Production Example 2).

The photosensitive resin composition layer 2 constituting the "laminate 2 before exposure" became the printing original plate 2 by peeling the surface protection film after exposure.

The exposure conditions of the section [Example 1-1] were applied to exposure conditions.

In this example, the MFR after exposure of the photosensitive resin composition 2 having the support and the surface protection film on the upper and lower sides was 0.2 g/10 min, which was less than half the MFR before exposure. It was therefore confirmed that the photosensitive resin composition was cured. The storage modulus (G') was 5.00 × 10⁵ Pa. The laser beam transmittance at the laser wavelength of 1064 nm was 92%, the laser beam transmittance at the laser wavelength of 515 nm was 84%, and the laser beam transmittance at the laser wavelength of 343 nm was 18%.

### [Example 5-2]

### (Printing plate)

The printing original plate 2 obtained by peeling the surface protection film from the "laminate having the printing original plate 2" prepared in the section [Example 5-1] was laser-engraved using ultrashort pulsed laser beam given below to obtain a printing plate.

Laser engraving was carried out on the printing original plate 2 under the laser engraving conditions of the section [Example 1-2].

The obtained linear indented pattern 1 had a depth of 320 µm and had a clear pattern edge. The linear indented pattern 2 had a depth of 110 µm and had a favorable pattern edge, albeit partially dissolved thermally.

### [Example 6-2]

### (Printing plate)

The printing original plate 2 obtained by peeling the surface protection film from the "laminate having the printing original plate 2" prepared in the section [Example 5-1] was laser-engraved using ultrashort pulsed laser beam given below to obtain a printing plate.

Laser engraving was carried out on the printing original plate 2 under the laser engraving conditions of the section [Example 4-2].

The obtained linear indented pattern 1 had a depth of 70 µm and had a clear pattern edge. The linear indented pattern 2 had a depth of 40 µm and had a clear pattern edge.

### [Example 7-1]

### (Laminate having printing original plate)

First, a laminate having printing original plate 3 was prepared from the "laminate 3 before exposure" obtained in the section (Production Example 3).

The photosensitive resin composition layer 3 constituting the "laminate 3 before exposure" became the printing original plate 3 by peeling the surface protection film after exposure.

The exposure conditions of the section [Example 1-1] were applied to exposure conditions.

In this example, the MFR after exposure of the photosensitive resin composition 3 having the support and the surface protection film on the upper and lower sides was 18.0 g/10 min, which was less than half the MFR before exposure. It was therefore confirmed that the photosensitive resin composition was cured. The storage modulus (G') was 4.3 × 10⁴ Pa. The laser beam transmittance at the laser wavelength of 1064 nm was 95%, the laser beam transmittance at the laser wavelength of 515 nm was 73%, and the laser beam transmittance at the laser wavelength of 343 nm was 55%.

### [Example 7-2]

### (Printing plate)

Laser engraving was carried out on the printing original plate 3 of the section [Example 7-1] under the laser engraving conditions of the section [Example 4-2] changed so as to involve a laser repetition frequency of 0.4 MHz, a pulse width of 25 picosecond, an average output of 4 W, a rate of overlap of 50%, and an energy of 400 µJ per pulse.

The obtained linear indented pattern 1 had a depth of 56 µm and had a clear pattern edge. The linear indented pattern 2 had a depth of 19 µm and had a clear pattern edge.

### [Example 8-2]

### (Printing plate)

The printing original plate 1 obtained by peeling the surface protection film from the "laminate having the printing original plate 1" prepared in the section [Example 1-1] was laser-engraved using ultrashort pulsed laser beam given below to obtain a printing plate.

The laser engraving of a fine pattern on the printing original plate 1 was carried out under the laser engraving conditions of the section [Example 1-2] by using a disc-type ultrashort pulsed semiconductor laser "TruMicro5380" (manufactured by TRUMPF, trademark), and condensing a third-order wave of 343 nm into a beam diameter of 8 µm using a lens. The laser under the changed conditions had a repetition frequency of 1 MHz, a pulse width of 1 picosecond, an average output of 20 W, a rate of overlap of 90.0%, a lens NA of 0.037, a depth of focus of 0.050 mm, and an energy of 20 µJ per pulse. The obtained linear indented pattern 1 had a depth of 53 µm and had a clear pattern edge. The linear indented pattern 2 had a depth of 18 µm and had a clear pattern edge.

### [Comparative Example 1-1]

### (Laminate having printing original plate)

First, a laminate having printing original plate 5 was prepared from the "laminate 5 before exposure" obtained in the section (Production Example 5).

The photosensitive resin composition layer 5 constituting the "laminate 5 before exposure" became the printing original plate 5 after exposure.

The exposure conditions of the section [Example 1-1] were applied to exposure conditions.

In this example, the MFR after exposure of the photosensitive resin composition 5 having the support and the surface protection film on the upper and lower sides was 32.0 g/10 min, which was not changed from the MFR before exposure. It was therefore confirmed that the photosensitive resin composition was not cured. The storage modulus (G') was 5.1 × 10⁶ Pa. The laser laser beam transmittance at the laser wavelength of 1064 nm was 95%, the laser beam transmittance at the laser wavelength of 515 nm was 84%, and the laser beam transmittance at the laser wavelength of 343 nm was 3%.

### [Comparative Example 1-2]

### (Printing plate)

The "laminate 5 having the printing original plate 5" which was not cured in the section [Comparative Example 1-1] was laser-engraved in a surface protection film-free state using ultrashort pulsed laser beam given below to obtain a printing plate.

Laser engraving was carried out on the printing original plate 2 under the laser engraving conditions of the section [Example 1-2].

The obtained linear indented pattern 1 had a depth of 28 µm, and the pattern 2 had a depth of 9 µm. The engraved depth was insufficient, and the obtained patterns were also dissolved and were unclear.

### [Comparative Example 2-1]

### (Laminate having printing original plate)

First, a laminate having printing original plate 6 was prepared from the "laminate 6 before exposure" obtained in the section (Production Example 6).

The photosensitive resin composition layer 6 constituting the "laminate 6 before exposure" became the printing original plate 6 after exposure.

The exposure conditions of the section [Example 1-1] were applied to exposure conditions.

In this example, the MFR after exposure of the photosensitive resin composition 6 having the support and the surface protection film on the upper and lower sides was 25 g/10 min, which was not changed from the MFR before exposure. It was therefore confirmed that the photosensitive resin composition was not cured. The storage modulus (G') was 4.3 × 10⁴ Pa. The laser beam transmittance at the laser wavelength of 1064 nm was 95.0%, the laser beam transmittance at the laser wavelength of 515 nm was 96.0%, and the laser beam transmittance at the laser wavelength of 343 nm was 18.0%.

### [Comparative Example 2-2]

### (Printing plate)

The printing original plate 6 of the "laminate having the printing original plate 6" which was not cured, prepared in the section [Comparative Example 2-1] was laser-engraved using ultrashort pulsed laser beam given below to obtain a printing plate.

Laser engraving was carried out on the printing original plate 2 under the laser engraving conditions of the section [Example 1-2].

The obtained linear indented pattern 1 had a depth of 32 µm, and the pattern 2 had a depth of 11 µm. The engraved depth was insufficient, and no favorable pattern was obtained.

### [Comparative Example 3-1]

### (Laminate having printing original plate)

First, a laminate having printing original plate 7 was prepared from the "laminate 7 before exposure" obtained in the section (Production Example 7).

The photosensitive resin composition layer 7 constituting the "laminate 7 before exposure" became the printing original plate 7 after exposure.

The exposure conditions of the section [Example 1-1] were applied to exposure conditions.

In this example, the MFR after exposure of the photosensitive resin composition 7 having the support and the surface protection film on the upper and lower sides was 42 g/10 min, which was not changed from the MFR before exposure. It was therefore confirmed that the photosensitive resin composition was not cured. The storage modulus (G') was 3.0 × 10⁴ Pa. The laser beam transmittance at the laser wavelength of 1064 nm was 45.0%, the laser beam transmittance at the laser wavelength of 515 nm was 4.0%, and the laser beamtransmittance at the laser wavelength of 343 nm was 4.0%.

### [Comparative Example 3-2]

### (Printing plate)

The printing original plate 7 of the "laminate having the printing original plate 7" which was not cured was laser-engraved using ultrashort pulsed laser beam given below to obtain a printing plate.

Laser engraving was carried out on the printing original plate 2 under the laser engraving conditions of the section [Example 1-2].

The obtained linear indented pattern 1 had a depth of 25 µm, and the pattern 2 had a depth of 8 µm. The engraved depth was insufficient, and no favorable pattern was obtained.

**[Table 1]**

| | Printing original plate used | Laser engraving wavelength | MFR 150°C 2.16 kg | Storage modulus | Laser beam transmittance (1064 nm) | Laser beam transmittance (515 nm) | Laser beam transmittance (343 nm) | Entire surface exposure | Curing |
|---|---|---|---|---|---|---|---|---|---|
| | | nm | g/10 min | Pa | % | % | % | | |
| Example 1-2 | Printing original plate 1 | 1064 | 1.0 | 1.0×10⁵ | 95 | 90 | 23 | Present | Present |
| Example 2-2 | Printing original plate 1 | 1064 | 1.0 | 1.0×10⁵ | 95 | 90 | 23 | Present | Present |
| Example 3-2 | Printing original plate 1 | 1064 | 1.0 | 1.0×10⁵ | 95 | 90 | 23 | Present | Present |
| Example 4-2 | Printing original plate 1 | 515 | 1.0 | 1.0×10⁵ | 95 | 90 | 23 | Present | Present |
| Example 5-2 | Printing original plate 2 | 1064 | 0.2 | 5.0×10⁵ | 92 | 84 | 18 | Present | Present |
| Example 6-2 | Printing original plate 2 | 515 | 0.2 | 5.0×10⁵ | 92 | 84 | 18 | Present | Present |
| Example 7-2 | Printing original plate 3 | 515 | 18.0 | 6.5×10⁴ | 95 | 73 | 55 | Present | Present |
| Example 8-2 | Printing original plate 1 | 343 | 1.0 | 1.0×10⁵ | 95 | 90 | 23 | Present | Present |
| Comparative Example 1-2 | Printing original plate 5 | 343 | 32.0 | 5.1×10⁶ | 95 | 84 | 3 | Present | Absent |
| Comparative Example 2-2 | Printing original plate 6 | 1064 | 25.0 | 4.3×10⁴ | 95 | 96 | 18 | Present | Absent |
| Comparative Example 3-2 | Printing original plate 7 | 1064 | 42.0 | 3.0×10⁴ | 45 | 4 | 4 | Present | Absent |

**[Table 2]**

| | Repetition frequency | Pulse width | Average output | Rate of overlap | NA | Depth of focus | Energy per pulse | Engraved depth at 145 µm square | Pattern formation at 145 µm square | Engraved depth at 65 µm square | Pattern formation at 65 µm square |
|---|---|---|---|---|---|---|---|---|---|---|---|
| | MHz | ps | W | % | - | mm | µJ | µm | | µm | |
| Example 1-2 | 10.0 | 0.1 | 100.0 | 95.0 | 0.037 | 0.25 | 20.0 | 480 | Clear | 160 | Favorable |
| Example 2-2 | 1.0 | 1 | 20.0 | 90.0 | 0.037 | 0.25 | 20.0 | 240 | Clear | 80 | Clear |
| Example 3-2 | 2.5 | 1 | 4.8 | 98.0 | 0.037 | 0.25 | 4.8 | 125 | Clear | 42 | Favorable |
| Example 4-2 | 1.0 | 1 | 5.0 | 96.9 | 0.070 | 0.10 | 5.0 | 115 | Clear | 40 | Clear |
| Example 5-2 | 10.0 | 0.1 | 100.0 | 95.0 | 0.037 | 0.25 | 20.0 | 320 | Clear | 110 | Favorable |
| Example 6-2 | 1.0 | 1 | 5.0 | 96.9 | 0.070 | 0.10 | 5.0 | 70 | Clear | 40 | Clear |
| Example 7-2 | 0.4 | 25 | 4.0 | 50.0 | 0.037 | 0.05 | 400.0 | 56 | Clear | 19 | Clear |
| Example 8-2 | 1.0 | 1 | 20.0 | 90.0 | 0.037 | 0.05 | 20.0 | 53 | Clear | 18 | Clear |
| Comparative Example 1-2 | 10.0 | 0.1 | 100.0 | 95.0 | 0.037 | 0.05 | 20.0 | 28 | Melted | 9 | Melted |
| Comparative Example 2-2 | 10.0 | 0.1 | 100.0 | 95.0 | 0.037 | 0.25 | 20.0 | 32 | Melted | 11 | Melted |
| Comparative Example 3-2 | 10 | 0.1 | 100.0 | 95.0 | 0.037 | 0.10 | 20.0 | 25 | Melted | 8 | Melted |

The present application is based on Japanese Patent Application No. 2020-042098 filed on March 11, 2020 in the Japan Patent Office, the contents of which are incorporated herein by reference.

### Industrial Applicability

The laminate and the method for producing a printing plate according to the present invention widely have industrial applicability in general commercial printing fields.

## Claims

1. A laminate comprising:
a support; a printing original plate; and a protection film, wherein
the printing original plate comprises a cured resin obtained by curing a photosensitive resin through an entire surface exposure on a side facing the protection film.

2. A laminate comprising:
a support; a printing original plate; and a protection film, wherein
the printing original plate is a printing original plate for indented pattern formation using an ultrashort pulsed laser beam.

3. The laminate according to claim 1 or 2, wherein
the printing original plate has a storage modulus G' of 5.00 × 10⁴ Pa or more and 1.00 × 10⁶ Pa or less at 140°C.

4. The laminate according to any one of claims 1 to 3, wherein
the printing original plate has a MFR of 0 or more and 20 (g/10 min) or less.

5. The laminate according to any one of claims 1 to 4, wherein
the printing original plate is a printing original plate for indented pattern formation using an ultrashort pulsed laser beam.

6. The laminate according to any one of claims 1 to 5, wherein
the printing original plate has a laser beam transmittance of 10% or more and 99.9% or less at a wavelength of an ultrashort pulsed laser beam for the indented pattern formation.

7. The laminate according to any one of claims 1 to 6, wherein
the printing original plate has a laser beam transmittance of more than 75% and 99.9% or less at a wavelength of an ultrashort pulsed laser beam for the indented pattern formation.

8. The laminate according to any one of claims 1 to 7, wherein
the printing original plate comprises a photosensitive resin having photodegradability, photopolymerizability, or photocrosslinkability at a time of irradiation with chemoradiation.

9. A method for producing a printing plate, comprising
a laser engraving step of forming an indented pattern on a surface of the printing original plate in the laminate according to any one of claims 1 to 8 using an ultrashort pulsed laser beam.

10. The method for producing the printing plate according to claim 9, wherein
the printing original plate has a storage modulus G' of 5.00 × 10⁴ Pa or more and 1.00 × 10⁶ Pa or less at 140°C.

11. The method for producing the printing plate according to claim 9 or 10, wherein
a rate of overlap between successive pulses of the ultrashort pulsed laser beam is 50% or more and 99% or less.

12. The method for producing the printing plate according to any one of claims 9 to 11, wherein
in the step of forming an indented pattern on a surface of the printing original plate using the ultrashort pulsed laser beam, with a lens having a numerical aperture (NA) of 0.010 or more and 0.100 or less.

13. The method for producing the printing plate according to any one of claims 9 to 12, wherein
a depth of focus of the ultrashort pulsed laser beam is 25 µm or more and 700 µm or less from a surface of the printing original plate.

14. The method for producing the printing plate according to any one of claims 9 to 13, wherein
the printing original plate has a laser beam transmittance of 10% or more and 99.9% or less, at a wavelength of an ultrashort pulsed laser beam for use in the laser engraving step.

15. The method for producing the printing plate according to any one of claims 9 to 14, wherein
the printing original plate has a laser beam transmittance of more than 75% and 99.9% or less, at a wavelength of an ultrashort pulsed laser beam for use in the laser engraving step.

16. The method for producing the printing plate according to any one of claims 9 to 15, wherein
an average output of a laser source of the ultrashort pulsed laser beam for use in the laser engraving step is 0.01 W or more and less than 1000 W.

17. The method for producing the printing plate according to any one of claims 9 to 16, wherein
a pulse width of the ultrashort pulsed laser beam for use in the laser engraving step is 1 femtosecond or more and 200 nanoseconds or less.

18. The method for producing the printing plate according to any one of claims 9 to 17, wherein
an oscillation wavelength of the ultrashort pulsed laser beam for use in the laser engraving step is 300 nm or more and 1.5 µm or less.

19. The method for producing the printing plate according to any one of claims 9 to 18, wherein
an oscillation wavelength of the ultrashort pulsed laser beam for use in the laser engraving step is 300 nm or more and less than 700 nm.

20. The method for producing the printing plate according to any one of claims 9 to 19, wherein
an energy per pulse of the ultrashort pulsed laser beam for use in the laser engraving step is 1 µJ or more and 100 kJ or less.

21. The method for producing the printing plate according to any one of claims 9 to 20, wherein
a repetition frequency of the ultrashort pulsed laser beam for use in the laser engraving step is 20 kHz or more and 500 MHz or less.
